# EUROPÄISCHE PATENTSCHRIFT

(11) **EP 3 189 645 B1**
(45) Veröffentlichungstag und Bekanntmachung des Hinweises auf die Patenterteilung: **06.05.2020**
(21) Anmeldenummer: 15760144.4
(22) Anmeldetag: 03.09.2015
(51) Int. Cl.: H04L 29/12, H04L 29/06, H04L 1/00

(54) **DATENÜBERTRAGUNG ZWISCHEN WENIGSTENS EINEM SICHEREN PRODUZENTEN UND WENIGSTENS EINEM SICHEREN KONSUMENTEN**
DATA TRANSMISSION BETWEEN AT LEAST ONE SAFE PRODUCER AND AT LEAST ONE SAFE CONSUMER
TRANSMISSION DE DONNÉES ENTRE UN PRODUCTEUR SÉCURISÉ ET AU MOINS UN CONSOMMATEUR SÉCURISÉ

(30) Priorität: 03.09.2014 DE 102014112704
(43) Veröffentlichungstag der Anmeldung: 12.07.2017
(73) Patentinhaber: Phoenix Contact GmbH & Co. KG, 32825 Blomberg (DE)
(72) Erfinder: HORN, Steffen, 32825 Blomberg (DE)
(74) Vertreter: Blumbach · Zinngrebe Patentanwälte PartG mbB
(86) Internationale Anmeldenummer: PCT/EP2015/070156
(87) Internationale Veröffentlichungsnummer: WO 2016/034676

(56) Entgegenhaltungen:
- EREL GERON ET AL: "CRUST: Cryptographic Remote Untrusted Storage without Public Keys", SECURITY IN STORAGE WORKSHOP, 2007. SISW '07. FOURTH INTERNATIONAL IEEE, IEEE, PISCATAWAY, NJ, USA, 30. September 2007 (2007-09-30), Seiten 3-14, XP031165343, ISBN: 978-0-7695-3052-9
- DEFENSE ADVANCED RESEARCH PROJECTS AGENCY INFORMATION SCIENCES INSTITUTE UNIVERSITY OF SOUTHERN CALIFORNIA 4676 ADMIRALTY WAY MARI: "TRANSMISSION CONTROL PROTOCOL DARPA INTERNET PROGRAM PROTOCOL SPECIFICATION prepared for Information Processing Techniques Office 1400 Wilson Boulevard 22209 by ; rfc793.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 30. September 1981 (1981-09-30), XP015006775, ISSN: 0000-0003
- WATSON M LUBY L VICISANO DIGITAL FOUNTAIN M: "Forward Error Correction (FEC) Building Block; rfc5052.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 31. August 2007 (2007-08-31), XP015055124, ISSN: 0000-0003
- GOH E ET AL: "SiRiUS: Securing Remote Untrusted Storage", PROCEEDINGS OF THE INTERNET SOCIETY (ISOC) NETWORK AND DISTRIBUTED SYSTEMS SECURITY (NDSS) SYMPOSIUM , Bd. 10th conf 6. Februar 2003 (2003-02-06), Seiten 131-145, XP007906728, Gefunden im Internet: URL:http://www.isoc.org/isoc/conferences/n dss/03/proceedings/papers/9.pdf [gefunden am 2015-10-28]

## Beschreibung

Zur Reduzierung eines Risikos für Mensch oder Umwelt bei automatisierten Prozessen, Maschinen und Anlagen müssen Sicherheitsfunktionen realisiert werden, wie z.B. die Abschaltung einer Maschine nach Drücken eines Not-Aus-Tasters oder die Überführung der Anlage in den Sicheren Zustand nach Erkennen eines Fehlers. Hier werden zunehmend fehlersichere Automatisierungssysteme eingesetzt. Im Allgemeinen realisieren diese fehlersicheren Automatisierungssysteme einerseits die eigentliche Sicherheitsfunktion (wie z.B. Not-Aus, Zweihand-Schaltung, Betriebsartenwahlschalter,...), zum anderen Fehlererkennende und -beherrschende Maßnahmen nach z.B. in Standards (IEC 61508, IS013849, ...) festgelegten Mechanismen, welche dem aktuellen Stand der Technik entsprechen.

Insbesondere die, die Sicherheit betreffende Normreihe IEC 61508 umfasst hierbei ferner die Anwendung diverser Methoden zur Beherrschung von Fehlern, wie bspw. die Vermeidung systematischer Fehler in der Entwicklung, die Überwachung im laufenden Betrieb zur Erkennung von zufälligen Fehlern und/oder die sichere Beherrschung von erkannten Fehlern (nachfolgend und in den Ansprüchen auch als fehlersichernd bezeichnet) und in Folge der Übergang in einen vorher als sicher definierten Zustand. Alle diese Maßnahmen können Teil von bestimmten, vorher festgelegten Sicherheitsfunktionen sein. Allgemein kann gesagt werden, dass zwei- oder mehrkanalige Systeme, bei denen jeder Kanal für sich allein eine Sicherheitsfunktion auslösen kann, mit weniger technischem Aufwand eine höhere Sicherheitseinstufung bzw. einen höheren Sicherheitslevel (englisch: Safety Integrity Level, "SIL") erreichen können als solche, die nur einen Kanal besitzen. Als Kanal wird dabei der Informationsfluss durch eine Sicherheitskette (Safety-Loop) bezeichnet, angefangen z.B. von der Anforderung einer Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Nicht zu dieser Sicherheit im Rahmen der Erfindung gehört demnach die elektrische Sicherheit.

In aktuellen Maschinen und Anlagen werden abhängig von der Ausdehnung der Anlagen und vom Automatisierungsgrad Kommunikationssysteme, wie z.B. Ethernet-basierte Netzwerke oder Feldbusse verwendet, die dezentrale E/A-Geräte (Eingabe-/Ausgabe-Geräte, wie z.B. Sensoren bzw. Aktoren) und Steuerungen verbinden. Für die Übertragung von sicherheitsrelevanten Daten werden in der Regel sichere Kommunikationsprotokolle benutzt.

Ist durch geeignete Maßnahmen somit gewährleistet, dass durch ein System, aber auch einen einzelnen Teilnehmer, wie z.B. Server, Steuerung, E/A-Geräte, bis hin zu einer einzelnen Hardware und/oder Software-Komponente eine bestimmte Sicherheitsfunktion wirksam erfüllt wird, gilt dieses System bzw. der jeweilige Teilnehmer oder die jeweilige Komponente im Rahmen der nachfolgenden Beschreibung und der Ansprüche als sicher oder sicherheitsgerichtet. Gelten für ein System, aber auch für einen einzelnen Teilnehmer oder eine einzelne Komponente keine sicherheitsgerichteten oder sicherheitsbezogenen Anforderungen und ist somit für das System oder den Teilnehmer oder die Komponente nicht das Erfüllen einer bestimmten Sicherheitsfunktion durch geeignete Maßnahmen gewährleistet, gilt dieses System, der jeweiliger Teilnehmer oder die jeweilige Komponente im Rahmen der nachfolgenden Beschreibung und der Ansprüche als nichtsicher.

Der Begriff "sicher" oder "Sicherheit" betrifft im Rahmen der Erfindung sowie in der Beschreibung und den Ansprüchen, soweit nichts anderes angegeben ist, demnach die funktionale Sicherheit. Im Englischen wird dies mit "safe" oder "safety" bezeichnet.

Abzugrenzen hiervon ist somit z.B. eine elektrische Sicherheit oder ein dahingehend sicherer Kommunikationskanal, bei welchem die diesbezügliche Sicherheit darin besteht, dass der Kommunikationskanal gegenüber unbefugten Zugriffen abgesichert ist, oder dahingehend sichere Daten, bei welchen die diesbezügliche Sicherheit darin besteht, dass die Daten gegenüber unbefugtes Mitlesen gesichert sind. Eine solche Sicherheit wird im Englischen mit "secure" oder "security" bezeichnet.

Sichere ("safe") Netzwerkprotokolle sind heutzutage standardisiert, z.B. in der IEC 61784-3. Dort werden basierend auf Grundsätzen der sicheren Netzwerkkommunikation unterschiedliche Sicherheitsprofile beschrieben. Alle diese Netzwerkprotokolle müssen die unterschiedlichen Fehlermodelle, wie z.B. eine Vermischung von sicheren und nichtsicheren Daten und/oder Telegrammen und/oder eine Verfälschung, Verlust, Verzögerung, Vertauschung, Wiederholung, Einfügung und so weiter von Daten und/oder Telegrammen, beherrschen. Sie definieren Fehler erkennende und Fehler beherrschende Maßnahmen in Kenntnis des ihnen unterlagerten Standard Netzwerkprotokolls, z.B. gemäß Feldbus- oder Ethernetbasierter Kommunikationsstandards, und der in diesen Netzwerken möglichen Fehlermodelle. Hierzu dient häufig das sogenannte "Black Channel Prinzip". Hierbei wird üblicherweise zwischen einer Sicherheitsanwendung und einen "nichtsicheren" Standardkommunikationskanal ein Sicherheitsprotokoll integriert, welches dem Sicherheitsniveau eines sicherheitsgerichtetem Systems entspricht und Übertragungsfehler der darunterliegenden Kommunikationsschichten erkennt und beherrscht. Das heißt, der "nichtsichere" Übertragungskanal wird durch ein übergeordnetes "sicheres" Protokoll laufend auf seine Integrität überwacht. Den standardisierten Sicherheitsprotokollen ist gemein, dass sie die Sicherheitskommunikation innerhalb eines klar definierten und begrenzten geschlossenen Netzwerkraumes beschreiben. So gibt es z.B. Restriktionen bei Anzahl und Verteilung der Standards und sicheren Netzwerkteilnehmer.

In der GS-ET-26 "Grundsätze für die Prüfung und Zertifizierung von Bussystemen für die Übertragung sicherheitsbezogener Nachrichten" Ausgabe 3-2014, beschreibt die "DGUV Test, Prüf- und Zertifizierungsstelle Elektrotechnik" neben den Anforderungen und den Prüfkriterien auch vier verschiedene Architekturmodelle von Bus-/ Netzwerksystemen. Die dort beschriebenen Architekturmodelle gehen bei der sicherheitsbezogenen Kommunikation jeweils von einer Nachrichtenquelle und einer Nachrichtensenke aus und unterscheiden sich lediglich in der Anordnung der für bestimmte Sicherheitslevel erforderlichen Redundanzen. Im Grundsatz handelt es sich jedoch immer um eine Punkt-zu-Punkt Beziehung der sicheren Kommunikation.

Die EP 1 188 096 beschreibt ein Steuerungssystem zum Steuern von sicherheitskritischen Prozessen. Innerhalb eines Netzwerkes sind hierbei ein Netzwerkmaster und sicherheitsbezogene Signaleinheiten, die mit dem zu steuernden sicherheitskritischen Prozess verbunden sind, über einen Feldbus angeschaltet. Ferner ist in dem Netzwerk eine Sicherheitssteuerung zum Steuern des sicherheitskritischen Prozesses vorgesehen, die auch an dem Feldbus, jedoch abgesetzt vom Netzwerkmaster angeordnet ist. Alle Sicherheitsteilnehmer sind somit über einen gemeinsamen Feldbus am selben Netzwerk angeschaltet und können untereinander sichere Telegramme austauschen. Jeder Sicherheitsteilnehmer enthält hierzu einen Protokollchip, der über einen ersten Busanschluss eingangsseitig und über einen zweiten Busanschluss ausgangsseitig mit dem Feldbus verbunden ist, so dass die Sicherheitsteilnehmer untereinander zu übertragende Daten/Informationen durch entsprechenden Zugriff auf den Feldbus austauschen können. Der Sicherheitssteuerung muss die Struktur des Netzwerks bekannt sein und insbesondere bewusst sein, an welcher Stelle des Feldbusses eine von ihr angesprochene sicherheitsbezogene Signaleinheit angeordnet ist. Daten/Informationen von und zu dem Netzwerkmaster müssen ferner durch die Sicherheitssteuerung jeweils umgesetzt werden.

Die DE 103 53 950 A1 beschreibt ein Steuerungssystem, bei welchem im Gegensatz zur EP 1 188 096 die Sicherheitssteuerung in einem Netzwerk feldbusunabhängig oder nicht über den Feldbus an einem Netzwerkmaster angeschlossen ist. Demnach erzeugt die Sicherheitssteuerung zunächst ein sicherheitsgerichtetes Protokoll und übermittelt dieses an den Netzwerkmaster. Die Kommunikation auf dem Feldbus wird anschließend insbesondere derart abgewickelt, dass das sicherheitsgerichtete Protokoll von dem Netzwerkmaster direkt und/oder ohne eigene sicherheitsrelevante Funktionalität als Nutzdaten in die Feldbustelegramme eingefügt und an die sicheren Signaleinheiten übertragen wird.

Die EP 2 053 476 A2 beschreibt ein System zum Betreiben wenigstens eines nicht-sicherheitskritischen und wenigstens eines sicherheitskritischen Prozesses. Hierbei ist zusätzlich zu einer Netzwerkmastereinrichtung eine separate Sicherheitssteuerung vorgesehen, welche hinsichtlich der für den sicherheitskritischen Applikationsprozess erforderlichen Kommunikation als sicherheitsbezogene Servereinrichtung ausgebildet ist. Diese verarbeitet die sicherheitsrelevanten Daten, die zur Steuerung des sicherheitskritischen Applikationsprozesses notwendig sind und organisiert die Übertragung der sicherheitsrelevanten Daten mit Hilfe einer Zuordnungseinrichtung. Die Zuordnungseinrichtung ist mit Funktionseinheiten ausgestattet, über welche diese Informationen über alle, zumindest über die für den sicherheitskritischen Prozess notwendigen Netzwerkelemente und deren notwendigen Kommunikationsbeziehungen untereinander erhält oder automatisch durch Zusammenwirken mit einer Netzwerkmastereinrichtung ermittelt. Darauf basierend initialisiert die Zuordnungseinrichtung die Netzwerkmastereinrichtung, woraufhin diese das Netzwerk in einer Art und Weise betreibt, dass auf Basis der Standard-Kommunikation eine übergelagerte Sicherheits-Kommunikation zwischen sicherheitsbezogenen Netzwerk-Teilnehmern ermöglicht wird, wie z.B. mehrere Punkt-zu-Punkt Beziehungen zwischen der Sicherheitssteuerung und den sicheren E/A-Geräten. Mit Hilfe einer solchen Zuordnungseinrichtung können die für die Kommunikation zwischen den sicherheitsbezogenen Netzwerk-Teilnehmern zu übertragenden Telegramme damit aktiv geroutet werden, ohne dass die Sicherheitssteuerung die Struktur des Gesamtnetzwerkes kennen muss, da quasi eine überlagerte sicherheitsbezogene Netzstruktur aufgebaut wird, welche über das Standard-Netzwerk unter Nutzung der vom Kommunikations-Master bereitgestellten Betriebsmitteln und Zugriffsregeln betrieben wird.

Geron et al. "CRUST: Cryptographic Remote Untrusted Storage without Public Keys" offenbart ein sicheres Weitergeben von Dateien mittels eines nicht vertrauenswürdigen Speichersystems. Alle vorgenannten Druckschriften des Standes der Technik betreffen somit die Kommunikation zwischen sicherheitsbezogenen Einrichtungen sowie Sicherheitsprotokolle in geschlossenen Netzwerken.

Ferner nutzt das von der Anmelderin entwickelte und seit 2009 zertifizierte "Safety Bridge System" der Anmelderin nicht sichere Netzwerkmaster und/oder eine nicht sichere Standardsteuerung innerhalb des Datenpfades zwischen sicheren Logikmodulen und den ihnen zugeordneten sicheren Geräten, sogenannten Satelliten, als nicht sichere Router der sicheren Telegramme. Die Sicherheitsfunktionen werden somit direkt in den sicheren Teilnehmern verarbeitet, sodass eine Sicherheitssteuerung und ein sicheres Feldbussystem entfallen können. Hierbei kopieren in einer Ausführungsform spezielle Funktionsbausteine letztendlich die Telegramme von einem sicheren Teilnehmer zum anderen, wodurch eine Punkt-zu-Punkt Beziehung entsteht. Für diesen Routingvorgang muss ein nicht sicherer Netzwerkmaster und/oder eine nicht sichere Standard Steuerung die Adressen der angeschlossenen sicheren Teilnehmer kennen und verwalten. Hier durch entsteht ein gewisser zusätzlicher Konfigurations- und Parametrierungsaufwand. Zusätzlich bedeutet das Routen innerhalb der nicht sicheren Einrichtung, d.h. in diesem Fall der nicht sichere Netzwerkmaster und/oder die nicht sichere Standardsteuerung, durch das aktive zyklische Kopieren der Daten (Telegramme) auch einen gewissen Performance-Aufwand. Die nicht sichere Einrichtung als Router der sicheren Nachrichten greift somit kommunikationstechnisch aktiv in den Datenfluss ein.

Die heutige Zeit ist geprägt von Cyper Physical Systems (CPS), Verteilung von Intelligenzen, Internet of Things (loT). Unter Industrie 4.0 wird die Migration von InternetTechnologien in die Automatisierungstechnik beschrieben. Die komplette horizontale und vertikale Vernetzung intelligenter Geräte (Sensorik, Steuerungslogik, Aktorik) ist die Voraussetzung für Modularisierung (d.h. für einen modularisierten Aufbau bis hin zu Gesamtsystemen, der sich aus standardisierten Einzelbauteilen entlang definierter Stellen, gegebenenfalls einschl. Programmschnittstellen, zusammensetzt), Wiederverwendung und Adaptionsfähigkeit von Maschinenmodulen. Dabei spielt die sicherheitsrelevante Vernetzung mehrerer Maschinen- oder Anlagenteile eine immer größere Rolle. Gleichzeitig gewinnen für die Automatisierungstechnik bisher weniger relevante Kommunikationsprotokolle immer mehr an Bedeutung. Bisherige Kommunikationsmechanismen wie Master/Slave werden ergänzt um Producer/Consumer oder Client/Server. Internettechnologien wie Cloud-Services spielen aktuell noch eine untergeordnete Rolle im Automatisierungsumfeld. Mit einem signifikanten Ansteigen der Bedeutung von IT-Services für die Automatisierungstechnisch ist stark zu rechnen.

Eine Aufgabe der Erfindung ist es, einen einfachen Weg aufzuzeigen, mit welchem eine sichere Kommunikation innerhalb offener Netzwerke und Strukturen unabhängig von Master/Slave, Client/Server und Producer/Consumer Architekturen, insbesondere unter Nutzung von IT (Informationstechnologien) und deren Standard-Strukturkomponenten, gewährleistet werden kann.

Die Aufgabe nach der Erfindung ist durch ein Verfahren und einem Netzwerksystem gemäß den anhängenden unabhängigen Ansprüchen gelöst. Vorteilhafte und zweckmäßige Weiterbildungen sind Gegenstand der jeweiligen Unteransprüche.

Demgemäß schlägt die Erfindung ein Verfahren zum Betreiben einer Datenübertragung zwischen wenigstens einem sicheren Produzenten von sicheren Daten und wenigstens einem sicheren Konsumenten von sicheren Daten vor, wobei der sichere Produzent ein Netzwerkteilnehmer ist, der an eine erste Netzwerkinfrastruktur angebunden ist und der sichere Konsument ein Netzwerkteilnehmer ist, der an die erste Netzwerkinfrastruktur oder an eine zweite Netzwerkinfrastruktur angebunden sein kann. Hierbei ist zunächst auf Seiten des wenigstens einen sicheren Produzenten von Daten das Erzeugen von sicheren Daten vorgesehen, und anschließend das schreibende Zugreifen auf einen Datenspeicher sowie das Einschreiben dieser erzeugten Daten, und zwar als solche identifizierbar, in den Datenspeicher.
Ergänzend oder Alternativ ist auf Seiten des wenigstens einen sicheren Konsumenten von Daten vorgesehen, das Konsumieren von sicheren Daten wenigstens eines sicheren Produzenten durch wenigstens einen dieser sicheren Konsumenten, wobei auf einen Datenspeicher zugegriffen wird, zwar zumindest lesend zugegriffen wird, in welchen für diesen wenigstens einen dieser sicheren Konsumenten bestimmte Daten als solche identifizierbar eingeschrieben werden. Die Daten, die in dem Datenspeicher als solche für diesen wenigstens einen sicheren Konsumenten bestimmte Daten identifizierbar eingeschrieben sind, werden daraufhin auf Seiten dieses wenigstens einen sicheren Konsumenten ausgelesen.

Da somit der Produzent und der Konsument eingerichtet und ausgebildet werden, dass die Funktionen des Erzeugens und Konsumierens auch für die gesamte Datenübertragung als Sicherheitsfunktion wirksam erfüllt werden, ist es somit mit der Erfindung folglich möglich, Sicherheitstelegramme temporär auf nicht sicheren Datenspeichern, einschließlich auf Datenspeichern von nicht sicheren Servern, zwischen zu speichern und dennoch zu gewährleisten, dass eine sichere Kommunikation und also eine sichere Datenübertragung zwischen einem sicheren Produzenten und einem sicheren Konsumenten wirksam erfüllt wird.

Gemäß nachfolgend noch detaillierter beschriebener bevorzugter Ausführungsformen kommet eine sicherheitsrelevante Kommunikation zwischen dem Produzenten von Daten und dem Konsumenten von Daten nach der Erfindung somit insbesondere durch die Schritte des Sendens eines Sicherheitstelegramms vom sicheren Produzenten zu einem Standard Datenserver, des Speicherns des Sicherheitstelegramms auf diesem Datenserver und des Auslesens des Sicherheitstelegramms durch mindestens einen sicheren Konsumenten zu Stande, wobei das Sicherheitstelegramm zweckmäßig zusätzliche Informationen vom sicheren Produzenten enthält, mit welchen der sichere Konsument die Datenintegrität, die "Herkunft", z.B. durch sichere (ggfl. weltweit eindeutige) Identifikation des Produzenten, und/oder das Alter der Daten, z.B. durch sichere Zeitstempel, fehlersicher ermitteln und prüfen kann.

Insbesondere zur praktischen Umsetzung dieses Verfahrens schlägt die Erfindung ferner ein Netzwerksystem zur Datenübertragung zwischen wenigstens einem sicheren Produzenten von Daten und wenigstens einem sicheren Konsumenten von Daten vor, wobei wenigstens einer dieser sicheren Produzenten eingerichtet ist, Daten für wenigstens einen dieser sicheren Konsumenten sicher zu erzeugen, und wenigstens einer dieser sicheren Konsumenten eingerichtet ist, Daten von wenigstens einem dieser sicheren Produzenten sicher zu konsumieren. Der sichere Produzent ist hierbei ein Netzwerkteilnehmer, der an eine erste Netzwerkinfrastruktur angebunden ist und der sichere Konsument ein Netzwerkteilnehmer, der an die erste Netzwerkinfrastruktur oder an eine zweite Netzwerkinfrastruktur angebunden sein kann. Das Netzwerksystem umfasst ferner einen Datenspeicher in welchen Daten einschreibbar und aus welchem Daten auslesbar sind, sowie zweckmäßig wenigstens eine erste Koppeleinheit und wenigstens eine zweite Koppeleinheit mit jeweils zumindest einer Schnittstelle, wenigstens einer dieser sicheren Produzenten, der eingerichtet ist, Daten für wenigstens einen dieser sicheren Konsumenten zu erzeugen, mit einer solchen ersten Koppeleinheit in Verbindung steht und diese erste Koppeleinheit eingerichtet und ausgebildet ist, dass mittels deren Schnittstelle eine Schreib-Zugriffsverbindung zu dem Datenspeicher aufbaubar ist, und hierüber von diesem sicheren Produzenten erzeugte Daten in dem Datenspeicher als solche identifizierbar eingeschrieben werden können. Wenigstens einer der sicheren Konsumenten, der eingerichtet ist, Daten von wenigstens einem dieser sicheren Produzenten sicher zu konsumieren steht mit einer solchen zweiten Koppeleinheit in Verbindung und diese zweite Koppeleinheit ist eingerichtet und ausgebildet, mittels der Schnittstelle einer Lese-Zugriffsverbindung zu dem Datenspeicher aufzubauen, und hierüber aus diesem Datenspeicher Daten, die in diesem Datenspeicher als für diesen sicheren Konsumenten bestimmte Daten identifizierbar eingeschrieben sind, auszulesen.

Eine sichere Kommunikation kann folglich auch über aktuell noch bestehende Grenzen von geschlossenen Netzwerken hinaus erfolgen, insbesondere auch über WEB-basierte Mechanismen. Dies eröffnet insbesondere auch eine äußerst flexible Zusammenstellung von zusammenwirkenden, insbesondere auch sicherheitsrelevant zusammenwirkenden Systemkomponenten an im Wesentlichen beliebigen dezentralen Orten, welches folglich auch die Möglichkeit und Fähigkeit von adaptiven sicheren Systemen, einschließlich Maschinen und deren Modulen, wesentlich steigert.

Insbesondere bei besonders bevorzugten Ausführungen, bei denen keine festen Produzenten - Konsumenten Zuordnungen, insbesondere einschließlich Sender - Empfänger Zuordnungen, von Sicherheitstelegrammen mehr existieren, sondern lediglich Erzeuger von sicherheitsrelevanten Daten, deren erzeugte sicherheitsrelevanten bzw. sicheren Daten dann mittels ersten Koppeleinheiten in Telegrammen an Datenspeicher, insbesondere auch an nichtsichere Datenspeicher, z.B. auch von nichtsicheren Server, versandt und ablegt werden, und Konsumenten von sicherheitsrelevanten Daten, die für diese Konsumenten von diesen Datenspeichern mittels zweiten Koppeleinheiten ausgelesen werden, ist ferner ein extrem flexibles An- und Abdocken von modularen Systemteilen, einschließlich Maschinenteilen und deren Modulteilen, ermöglicht, da keine verbindungsorientierten Kommunikationsbeziehungen mehr notwendig sind oder es auch keine solchen verbindungsorientierten Kommunikationsbeziehungen mehr gibt.
Diese und weitere Vorteile und Merkmale der Erfindung werden auch anhand der nachfolgenden Beschreibung einiger Ausführungsbeispiele unter Bezugnahme auf die beigefügten Zeichnungen ersichtlich, wobei es sich versteht, dass diese Merkmale nicht nur in der jeweils beschriebenen Kombination sondern auch in anderen Kombinationen oder in Alleinstellung verwendbar sind, ohne den Rahmen verwendbar sind, ohne den Rahmen der Erfindung zu verlassen. Die Erfindung wird durch die beigefügten Ansprüche bestimmt. Es zeigen:
- Fig. 1: ein stark vereinfachtes Prinzipbild einer sicheren Kommunikation nach der Erfindung über einen Datenspeicher,
- Fig. 2: eine schematische Ansicht einer sichereren Kommunikation nach der Erfindung zwischen zwei als sicherer Produzent und als sicherer Konsument eingerichteten Safety-Geräten von separaten Netzwerkinfrastrukturen über eine weitere Netzwerkinfrastruktur, insbesondere dem Internet, und insbesondere eine Cloud-Computing-Infrastruktur,
- Fig. 3: eine schematische Ansicht, einer sicheren Übertragung von vier sicheren Produzenten zu zwei sicheren Konsumenten, bei denen defacto keine bidirektionale sichere Kommunikationsbeziehung existiert, und
- Fig. 4: einen "Screenshot" eines auf einem Monitor angezeigten Ausschnittes eines Konfigurationsmenüs zum Einstellen der Cloud Parameter für einen Datensatz im Rahmen der Erfindung.

Alle Figuren zeigen stark vereinfachte und/oder schematische nicht maßstabsgerechte Darstellungen. Ähnliche oder identische Elemente sind in der Regel in den Figuren mit gleichen Bezugszeichen bezeichnet.

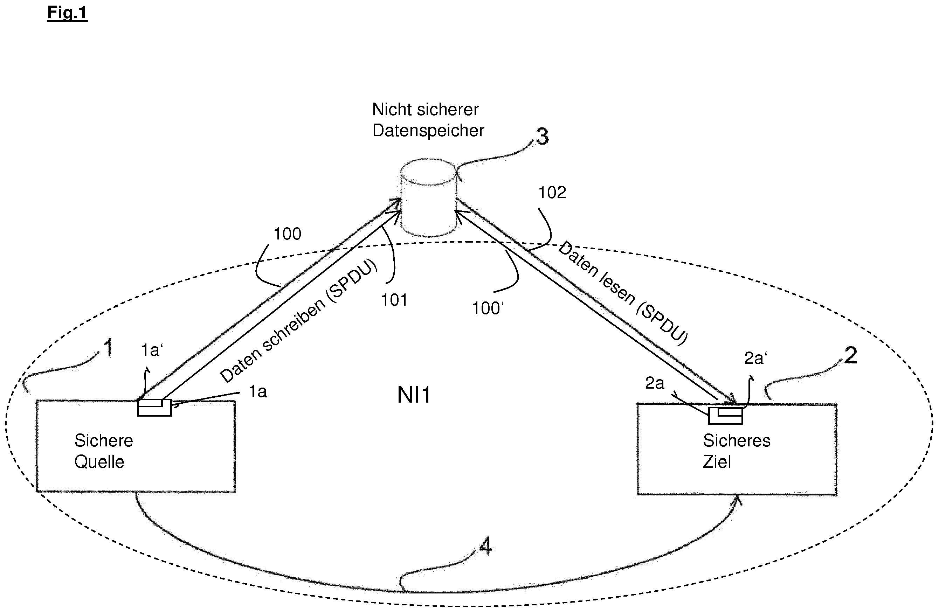

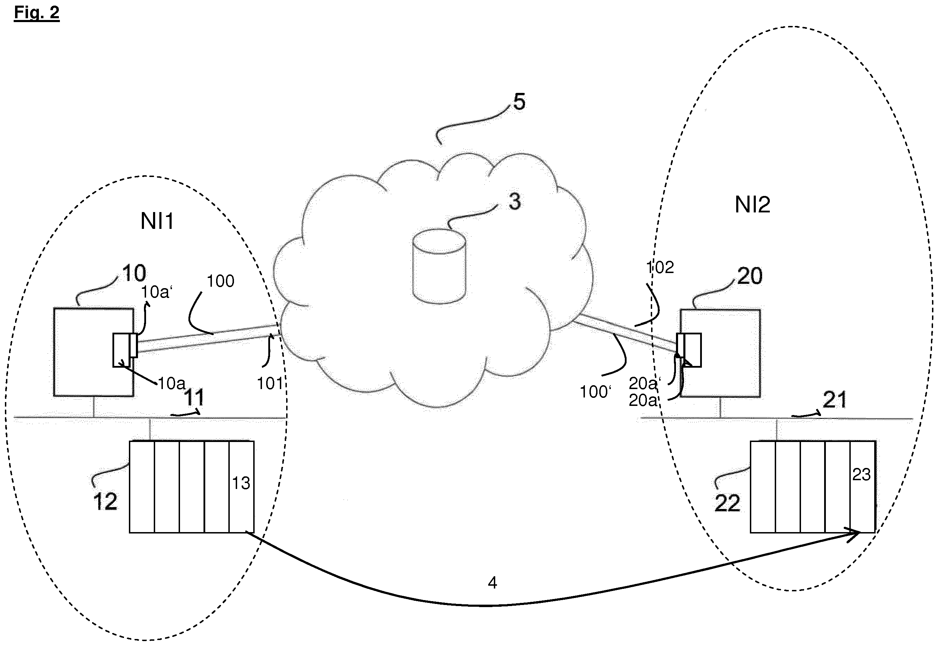

Die in den Figuren gezeigten Darstellungen sicherer Kommunikationen nach der Erfindung sind zunächst jeweils Ausführungsbeispiele zur Veranschaulichung von Verfahren nach der Erfindung zum Betreiben einer Datenübertragung zwischen wenigstens einem sicheren Produzenten von sicheren Daten und wenigstens einem sicheren Konsumenten von sicheren Daten, wobei der sichere Produzent ein Netzwerkteilnehmer ist, der an eine erste Netzwerkinfrastruktur angebunden ist und der sichere Konsument ein Netzwerkteilnehmer ist, der an die erste Netzwerkinfrastruktur oder an eine zweite Netzwerkinfrastruktur angebunden sein kann. Ein sicherer Produzent von sicheren Daten ist bei Fig. 1 z.B. ein mit dem Bezugszeichen 1 als "sichere Quelle" bezeichneter sicherer Sender und bei Fig. 2 ein mit dem Bezugszeichen 13 gekennzeichneter sicherer Sender und ein sicherer Konsument von sicheren Daten ist bei Fig. 1 z.B. ein mit dem Bezugszeichen 2 als "sicheres Ziel" bezeichneter sicherer Empfänger und bei Fig. 2 ein mit dem Bezugszeichen 23 gekennzeichneter sicherer Empfänger.

Nach dem Erzeugen von sicheren Daten durch den sicheren Sender 1 oder 13 als sicherer Produzent von sicheren Daten für wenigstens einen als sicheren Konsumenten vorgesehenen Empfänger 2 bzw. 23 wird beim Schritt eines Sendens während der Datenübertragung der erzeugten sicheren Daten zwischen diesen Produzenten und Konsumenten auf einen Datenspeicher 3 zugegriffen, und zwar zumindest schreibend zugegriffen 100, und diese Daten als solche identifizierbar in den Datenspeicher 3 eingeschrieben 101. Und/oder zum Konsumieren von sicheren Daten des sicheren Senders 1 oder 13 durch den sicheren Empfänger 2 bzw. 23 wird beim Schritt eines Empfangens während der Datenübertragung der erzeugten sicheren Daten zwischen diesen Produzenten und Konsumenten wiederum auf den Datenspeicher 3 zugegriffen, und zwar zumindest lesend zugegriffen 100', zweckmäßig zyklisch zugegriffen, in welchen für den sicheren Konsumenten, also für den sicheren Empfänger 2 (Fig. 1) bzw. 23 (Fig. 2), bestimmte Daten als solche identifizierbar in den Datenspeicher eingeschrieben werden, und die Daten, die darin als für den sicheren Konsumenten bestimmte Daten identifizierbar eingeschrieben sind, werden ausgelesen 102. Dadurch, dass die erzeugten sicheren Daten von Seiten des Produzenten als solche identifizierbar im Datenspeicher und in Folge für den sicheren Konsumenten als für ihn bestimmte Daten identifizierbar eingeschrieben werden, können die Daten folglich gezielt als solche identifizierbar ausgelesen bzw. abgeholt werden ohne, dass auf Seiten des Datenspeichers 3 diese Daten aktiv geroutet werden müssen.

Gemäß der Erfindung umfassen die in den Fign 1 und 2 beispielhaft stark vereinfacht und aus Übersichtsgründen lediglich ausschnittsweise skizzierten Netzwerksysteme zur Datenübertragung zwischen dem sicheren Sender 1 bzw. 13 als sicheren Produzenten von sicheren Daten und dem sicheren Empfänger 2 bzw. 23 als sicheren Konsumenten von sicheren Daten zusätzlich zu dem Datenspeicher 3, in welchen Daten einschreibbar und aus welchem Daten auslesbar sind, jeweils wenigstens eine erste Koppeleinheit 1a bzw. 10a und wenigstens eine zweite Koppeleinheit 2a bzw. 20a mit jeweils wenigstens einer Schnittstelle 1a' bzw. 10a' und 2a' bzw. 20a'. Der sichere Sender 1 bzw. 13 als sicherer Produzent von sicheren Daten ist ein Netzwerkteilnehmer, der an eine erste Netzwerkinfrastruktur NI1 angebunden ist und der sichere Empfänger 2 bzw. 23 als sicherer Konsument von sicheren Daten ein Netzwerkteilnehmer, der an die erste Netzwerkinfrastruktur NI1 oder an eine zweite Netzwerkinfrastruktur NI2 angebunden sein kann. Bei Fig. 1 ist z.B. eine gemeinsame erste Netzwerkinfrastruktur NI1 angedeutet, zu welcher auch der Datenspeicher 3 gehören kann aber nicht muss. Bei Fig. 2 sind z.B. zwei unterschiedliche, jeweils einen lokalen Bus 11 bzw. 21 umfassende erste und zweite Netzwerkinfrastrukturen NI1 bzw. NI2 angedeutet.

Hierbei ist bei einem Netzwerksystem zur Datenübertragung zwischen wenigstens einem sicheren Produzenten von Daten und wenigstens einem sicheren Konsumenten von Daten somit wenigstens ein sicherer Produzent eingerichtet, Daten für wenigstens einen sicheren Konsumenten sicher zu erzeugen, und wenigstens ein sicherer Konsument eingerichtet, Daten von wenigstens einem dieser sicheren Produzenten sicher zu konsumieren. Basierend auf Fig. 1 ist somit der sichere Sender 1 beispielhaft eingerichtet, Daten für den sicheren Empfänger 2 sicher zu erzeugen und diese in einer praktischen Umsetzung auch an diesen zu senden. Der sichere Empfänger 2 ist somit bevorzugt eingerichtet, Daten von dem sicheren Sender 1 sicher zu konsumieren und diese in einer praktischen Umsetzung auch entsprechend zu empfangen. Basierend auf Fig. 2 ist der sichere Sender 13 beispielhaft eingerichtet, Daten für den sicheren Empfänger 23 sicher zu erzeugen und diese in einer praktischen Umsetzung auch an diesen zu senden. Der sichere Empfänger 20 ist somit bevorzugt eingerichtet, Daten von dem sicheren Sender 13 sicher zu konsumieren und diese in einer praktischen Umsetzung auch entsprechend zu empfangen.

Im Rahmen der Erfindung steht wenigstens einer der sicheren Produzenten, der eingerichtet ist, Daten für wenigstens einen sicheren Konsumenten zu erzeugen, mit einer zuvor erwähnten ersten Koppeleinheit in Verbindung, wobei diese erste Koppeleinheit eingerichtet und ausgebildet ist, mittels deren Schnittstelle durch Aufbau zumindest einer Schreib-Zugriffsverbindung 100 zu dem Datenspeicher 3 von diesem sicheren Produzenten erzeugte Daten in dem Datenspeicher 3 als solche identifizierbar einzuschreiben 101. Basierend auf den Fig. 1 und 2 steht folglich die erste Koppeleinheit 1a, 10a mit dem sicheren Sender 1 bzw. 13 in Verbindung und ist eingerichtet und ausgebildet, mittels der Schnittstelle 1a' bzw. 10a' durch Aufbau zumindest einer Verbindung zum schreibenden Zugreifen 100, d.h. der Schreib-Zugriffsverbindung, zu dem Datenspeicher 3 von dem sicheren Sender 1 bzw. 10 gesandte Daten auf den Datenspeicher 3 als solche identifizierbar einzuschreiben 101.

Ferner steht im Rahmen der Erfindung wenigstens einer der sicheren Konsumenten, der eingerichtet ist, Daten von wenigstens einem der sicheren Produzenten sicher zu konsumieren, mit einer zuvor erwähnten zweiten Koppeleinheit in Verbindung, wobei diese zweite Koppeleinheit eingerichtet und ausgebildet ist, mittels deren Schnittstelle durch Aufbau zumindest einer Lese-Zugriffsverbindung 100' zu dem Datenspeicher 3 aus diesem Daten des sicheren Produzenten, die in diesem Datenspeicher als für diesen sicheren Konsumenten bestimmte Daten identifizierbar eingeschrieben sind, auszulesen 102.

Basierend auf den Fig. 1 und 2 steht folglich die zweite Koppeleinheit 2a, 20a mit dem sicheren Empfänger 2 bzw. 20 in Verbindung und ist eingerichtet und ausgebildet ist, mittels der ersten Schnittstelle 2a' bzw. 20a' durch Aufbau zumindest einer Zugriffsverbindung zum lesenden Zugreifen 100', d.h. der Lese-Zugriffsverbindung, zu dem Datenspeicher 3 aus diesem Daten des sicheren Senders 1 bzw. 10, die in diesem als für den sicheren Empfänger bestimmte Daten identifizierbar eingeschrieben sind, auszulesen 102.

Dadurch, dass die erzeugten sicheren Daten von Seiten des Produzenten als solche identifizierbar im Datenspeicher und in Folge für den sicheren Konsumenten als für ihn bestimmte Daten identifizierbar eingeschrieben werden, können die Daten folglich gezielt als solche identifizierbar ausgelesen bzw. abgeholt werden ohne, dass auf Seiten des Datenspeichers 3 diese Daten aktiv geroutet werden müssen.

Ist in einer, in den Figuren aus Übersichtsgründen jedoch nicht dargestellten Weiterbildung, ein sicherer Produzent, z.B. der Sender 1, auch als sicherer Konsument eingerichtet und/oder ein sicherer Konsument, z.B. der sichere Empfänger 13, auch als sicherer Produzent eingerichtet, so können entsprechend anstelle jeweils einer Koppeleinheit zwei Koppeleinheiten, eine zum Lesen und eine zum Schreiben, vorgesehen sein oder es kann jeweils eine Koppeleinheit vorgesehen sein, die jedoch dann z.B. zum Aufbau einer Verbindung zum Schreib-Lese-Zugreifen, d.h. einer Zugriffsverbindung eingerichtet ist, über welche sowohl eingeschrieben als auch ausgelesen werden kann.

Wie in den Fign. 1 und 2 ferner zu sehen, kann in alternativen Ausführungen die erste Koppeleinheit eine Einheit des sicheren Produzenten sein (Fig. 1) oder eines ersten weiteren Netzwerkteilnehmers 10 sein (Fig. 2), der an die erste Netzwerkinfrastruktur angebunden ist. Auch die zweite Koppeleinheit kann eine Einheit des sicheren Konsumenten (Fig. 1) sein oder eines zweiten weiteren Netzwerkteilnehmers 20 sein (Fig. 2), der auch an die Netzwerkinfrastruktur des sicheren Konsumenten angebunden ist. Es sei erwähnt, dass je nach Ausbildung des Netzwerkwerksystems die eine Koppeleinheit eine Einheit des sicheren Produzenten oder sicheren Konsumenten sein kann und die andere Koppeleinheit eine Einheit eines weiteren Netzwerkteilnehmers sein kann. In Rahmen der Erfindung können die Koppeleinheiten in Hard- und/oder Software und besonders bevorzugt als sogenanntes Embedded Device ausgeführt sein.

Auch der Datenspeicher 3 kann je nach Ausbildung des Netzwerkwerksystems an die erste Netzwerkinfrastruktur NI2, an die zweite Netzwerkinfrastruktur NI2 oder an eine dritte Netzwerkinfrastruktur angebunden sein. Bei Fig. 2 ist z.B. eine Ausführungsform dargestellt, bei welcher der Datenspeicher 3 an eine dritte Netzwerkinfrastruktur, insbesondere dem Internet, angebunden ist und insbesondere Teil einer Cloud-Computing-Infrastruktur 5 ist. Netzwerkteilnehmer innerhalb einer gemeinsamen Netzwerkinfrastruktur können hierbei vorteilhafterweise Daten gemäß einem vordefinierten Kommunikationsprotokoll übertragen, so dass diesbezügliche, je nach Netzwerkinfrastruktur auch bereits eingesetzte Protokolle für die Anwendung der Erfindung nicht geändert werden müssen.

Um die Funktionen des Erzeugens von sicheren Daten und des Konsumierens von sicheren Daten auch über die gesamte Datenübertragung hinweg als Sicherheitsfunktion wirksam zu erfüllen, d.h. eine sichere Kommunikation bzw. eine sichere Datenübertragung zwischen einem sicheren Sender und einem sicheren Empfänger, und Sicherheitstelegramme temporär auf nicht sicheren Datenspeichern, einschließlich auf Datenspeichern von nicht sicheren Servern, zwischen zu speichern ohne, dass gesonderte sicherheitsrelevante Anforderungen hinsichtlich Fehlererkennung, Konfiguration und Laufzeiteigenschaften gestellt werden müssen, ist in bevorzugter Weise vorgesehen, dass der sichere Produzent, z.B. der sichere Sender 1, 13 und der sichere Konsument, z.B. der sichere Empfänger 2, 23 eingerichtet und ausgebildet sind, für die sichere Übertragung von sicheren Daten, die zwischen dem sicheren Produzenten und dem sicheren Konsumenten zu übertragen sind, ein gemeinsames vordefiniertes Sicherheitsprotokoll anzuwenden, insbesondere ein Sicherheitsprotokoll, welches unabhängig von der Verwendung jeweiliger Kommunikationsprotokolle zwischen Netzwerkteilnehmern diesen Kommunikationsprotokollen überlagert ist oder überlagert werden kann. Hierfür kann der Fachmann folglich je nach spezifischer Anwendung ein geeignetes aus einer Vielzahl von an und für sich bekannten Kommunikationsprotokollen auswählen und kann auch den sicheren Sender 1 bzw. 13 als sicheren Produzenten und den sicheren Empfänger 2 bzw. 23 als sicheren Konsumenten im Rahmen der Erfindung entsprechend einrichten und ausbilden.

Die im Rahmen der Erfindung sicher erzeugten und sicher konsumierten und folglich im Rahmen der Erfindung zu übertragenden Daten können daher bevorzugt ferner auch sicherheitsrelevante Daten sein.

In einer zweckmäßigen und bevorzugten Ausbildung eines erfindungsgemäßen Netzwerksystems sind jegliche Sicherheitsmechanismen zur Umsetzung von fehlererkennenden und zweckmäßig auch -sichernden Maßnahmen in Bezug auf Daten, die zwischen dem sicheren Produzenten, z.B. dem sicheren Sender 1 bzw. 13, und dem sicheren Konsumenten, z.B. dem sicheren Empfänger 2 bzw. 23 zu übertragen sind, ausschließlich im sicheren Produzenten und sicheren Konsumenten vorhanden. Dies ist insbesondere der Fall, wenn eine bidirektionale sichere Kommunikationsbeziehung gegeben ist oder sein soll, d.h. dass auch der sichere Produzent in der Lage ist bzw. hierfür eingerichtet wird, Auswertungen des Übertragens der sicheren Daten vornehmen zu können und gegebenenfalls auch damit verbundene fehlersichere Reaktionen auszulösen.

In einer weiteren besonders zweckmäßigen und besonders bevorzugten Ausbildung eines erfindungsgemäßen Netzwerksystems erfolgt zumindest die Umsetzung von fehlererkennenden und zweckmäßig auch -sichernden Maßnahmen in Bezug auf Daten, die zwischen dem sicheren Produzenten, z.B. dem sicheren Sender 1 bzw. 13, und dem sicheren Konsumenten, z.B. dem sicheren Empfänger 2 bzw. 23 zu übertragen sind, ausschließlich im sicheren Konsumenten vorhanden. Dies ist insbesondere der Fall, wenn keine oder zumindest quasi keine bidirektionale sichere Kommunikationsbeziehung gegeben ist oder sein soll, d.h. dass lediglich der sichere Konsument in der Lage ist bzw. hierfür eingerichtet wird, Auswertungen des Übertragens der sicheren Daten vornehmen zu können und gegebenenfalls auch damit verbundene fehlersichere Reaktionen auszulösen.

In diesem Fall müssen im sicheren Produzenten keine fehlererkennenden Sicherheitsmechanismen vorhanden sein sondern dieser unterstützt die fehlererkennenden Maßnahmen des Konsumenten bevorzugt lediglich durch die fehlersichere Erzeugung von für die Fehlererkennung gegebenenfalls erforderlichen Informationen.

Ferner ist je nach spezifischer Anwendung einerseits in dem sicheren Produzenten, der eingerichtet ist, Daten für wenigstens einen dieser sicheren Konsumenten zu erzeugen, z.B. dem sicheren Sender 1 bzw. 13, und/oder in der mit diesem in Verbindung stehenden ersten Koppeleinheit, z.B. der Koppeleinheit 1a bzw. 10a, sowie andererseits in dem sicheren Konsumenten, der eingerichtet ist, Daten von wenigstens einem dieser sicheren Produzenten sicher zu konsumieren, z.B. dem sicheren Empfänger 2 bzw. 23, und/oder in der mit diesem in Verbindung stehenden zweiten Koppeleinheit, z.B. der Koppeleinheit 2a bzw. 20a, eines erfindungsgemäßen Netzwerksystems jeweils wenigstens eine vorbestimmte Identifikationsinformation hinterlegt und diese jeweils eingerichtet und ausgebildet, zumindest das Einschreiben und Auslesen unter Verwendung dieser jeweils wenigstens einen Identifikationsinformation durchzuführen. Eine solche Identifikationsinformation kann z.B. eine Adressinformation des sicheren Produzenten, des sicheren Konsumenten und/oder eines bestimmten Speicherbereichs des Datenspeichers sein, in welchen zwischen wenigsten einem sicheren Produzenten und wenigstens einem sicheren Konsumenten zu übertragende Daten einzuschreiben sind und/oder auszulesen sind.

Insbesondere hierdurch kann auf einfachste Weise je nach Anwendung des erfindungsgemäßen Verfahrens und/oder Einsatz des erfindungsgemäßen Netzwerksystem in einer ersten Ausbildung ein sichererer Produzent, der eingerichtet ist, Daten für wenigstens einen dieser sicheren Konsumenten zu erzeugen, zweckmäßig derart eingerichtet sein, Daten für wenigstens einen bestimmten sicheren Konsumenten sicher zu erzeugen und/oder die mit diesem sichereren Produzenten in Verbindung stehende erste Koppeleinheit zweckmäßig eingerichtet sein, Daten für wenigstens einen bestimmten sicheren Konsumenten in dem Datenspeicher einzuschreiben. Hierfür kann z.B. eine Adressinformation eingesetzt werden, die den bestimmten sicheren Konsumenten und/oder einen bestimmten Speicherbereich des Datenspeichers identifiziert.

In einer zweiten, ergänzenden oder alternativen Ausbildung kann insbesondere hierdurch ferner ein sichererer Produzent, der eingerichtet ist, Daten für wenigstens einen dieser sicheren Konsumenten zu erzeugen, zweckmäßig derart eingerichtet sein, Daten unabhängig von einem bestimmten sicheren Konsumenten zu erzeugen und/oder die mit diesem in Verbindung stehende erste Koppeleinheit zweckmäßig eingerichtet sein, Daten unabhängig von einem bestimmten sicheren Konsumenten in dem Datenspeicher einzuschreiben. Hierfür kann z.B. eine Adressinformation eingesetzt werden, die den sicheren Produzenten und/oder einen bestimmten Speicherbereich des Datenspeichers identifiziert.

In einer weiteren, ergänzenden oder alternativen Ausbildung kann insbesondere hierdurch ferner ein sicherer Konsument, der eingerichtet ist, Daten von wenigstens einem der sicheren Produzenten sicher zu konsumieren, zweckmäßig derart eingerichtet sein, Daten von einem bestimmten sicheren Produzenten zu konsumieren und/oder die mit diesem Konsumenten in Verbindung stehende zweite Koppeleinheit zweckmäßig eingerichtet sein, Daten von einem bestimmten sicheren Produzenten auszulesen. Hierfür kann z.B. eine Adressinformation eingesetzt werden, die den sicheren Produzenten und/oder einen bestimmten Speicherbereich des Datenspeichers identifiziert.

Im Rahmen der Erfindung läuft der Datenfluss zwischen einem sicheren Produzenten und einem sicheren Konsumenten somit nicht direkt über eine Punkt-zu-Punkt Verbindung oder über einen aktiven Routing-/Kopiermechanismus. Vielmehr erfolgt die Datenübertragung zwischen einem sicheren Produzenten und einem sicheren Konsumenten indirekt über einen Datenspeicher, der insbesondere auch Teil eines Servers sein kann, und ggf. unter Nutzung von Cloud-Technologien. Dieser Datenspeicher und/oder Server kann ferner zweckmäßig auch ein nicht sicherer sein.

Ferner können folglich im Rahmen der Erfindung vom Produzenten sichere Daten unabhängig vom Zustand des Konsumenten und bei besonders bevorzugten Ausführungen somit auch unabhängig vom Vorhandensein eines Konsumenten und/oder auch unabhängig von der Anzahl von Konsumenten zuerst generiert und/oder anschließend diese in einen Datenspeicher eingeschrieben werden. Ferner kann somit auch bevorzugt unabhängig vom Zustand eines Produzenten von Seiten des Konsumenten aus, insbesondere auch von mehreren Konsumenten aus, dann zweckmäßig jederzeit, zweckmäßig zyklisch, die eingeschrieben sicheren Daten vom Datenspeicher abgerufen und konsumiert werden.

Die sicheren Daten können hierbei, wie zuvor beschrieben, insbesondere innerhalb einer sicheren Nachricht bzw. eines sicheren Telegramms und insbesondere unter Verwendung eines geeignet ausgewählten Sicherheitsprotokolls.

Alle zur eindeutigen Identifikation des Kommunikationsweges bei der Datenübertragung von sicheren Daten zwischen einem sicheren Produzenten und einem sicheren Konsumenten von Daten können somit je nach spezifischer Ausbildung auch oder auch nur Bestandteil eines sicheren Telegramms sein. Im letzteren Fall, also insbesondere dann, wenn die ersten und zweiten Koppeleinheiten Teil des sicheren Produzenten und des sicheren Konsumenten sind, müssen dann folglich bei Ausführungsformen, bei denen noch eine bidirektionale sichere Kommunikationsbeziehung gegeben ist, lediglich der sichere Produzent und der sichere Konsument zumindest eine entsprechend eindeutige Identifikationsinformation kennen.

Bei den besonderes bevorzugten Ausführungsformen, bei denen defacto keine bidirektionale sichere Kommunikationsbeziehung mehr zwischen einem Produzenten und einem Konsumenten mehr existiert, sondern Produzenten sicherheitsrelevante Daten diese in Unkenntnis und unabhängig davon, ob diese jemals konsumiert werden, sicher erzeugen, können diese sicher erzeugten Daten dann z.B. allein basierend auf Informationen, die einen bestimmten Speicherbereich eines bestimmten Datenspeichers identifizieren, an einen Datenspeicher, insbesondere an einen nichtsicheren gesandt und dort eingeschrieben werden. Wie dem Fachmann ersichtlich, können diese Informationen wiederum je nach spezifischer Ausbildung auch oder auch nur Bestandteil eines sicheren Telegramms sein. Der Datenspeicher dient hierbei somit quasi als eine Art "remote" Datenablage für einen solchen Produzenten. Dieser benötigt in diesem Fall also auch keine Rückantwort von einem potentiellen Konsumenten dieser sicheren Daten bzw. eines diese umfassenden sicheren Telegramms. Insbesondere in diesem Fall werden somit im Produzenten damit auch keine sicherheitsrelevanten Auswertungen des Erfolgs/Misserfolgs des Versendens des Sicherheitstelegramms und damit verbundene fehlersichere Reaktionen vorgenommen. Mit anderen Worten, ist es dem sicheren Produzenten egal, ob die Daten und/oder das Telegramm unterwegs zu irgendeinem Konsumenten verfälscht oder vertauscht oder verzögert wurden oder anderweitige Fehler entsprechend der zuvor diskutierten Fehlermodelle aufweisen. In diesem Fall werden folglich sämtliche Maßnahmen für die Erkennung von Übertragungsfehlern von einem sicheren Produzenten zu einem sicheren Konsumenten ausschließlich im sicheren Konsumenten umgesetzt, insbesondere auch jegliche fehlersichere Reaktion auf erkannte Übertragungsfehler. Wie zuvor bereits angesprochen, unterstützt der Produzent jedoch zweckmäßig die fehlererkennenden Maßnahmen des Konsumenten zumindest durch die fehlersichere Erzeugung von für die Fehlererkennung geeigneten und notwendigen zusätzlichen Informationen wie, z.B. sichere (ggfl. weltweit eindeutige) Identifikation des Produzenten, sichere Zeitstempel, sichere fortlaufende Nummern und/oder sichere CRCs.

Der Datenspeicher/Server kann selber wiederum bevorzugt die schreibenden und lesenden Zugriffe zweckmäßig unterstützen. Er routet jedoch selber nicht aktiv.

Ferner werden somit bevorzugt im Sicherheitstelegramm neben den eigentlich zu übertragenden sicheren und also insbesondere sicherheitsrelevanten Nutzdaten auch alle für eine sichere Übertragung notwendigen redundanten Informationen wie z.B. eine eindeutige Identifikation, laufende Nummern, Zeitstempel oder CRCs übertragen, wobei die Umsetzung von fehlererkennenden und zweckmäßig auch - sichernden Maßnahmen je nach Ausbildung entweder ausschließlich im Produzenten und Konsumenten oder nur im Konsumenten erfolgen können. Fehler beim Schreiben in einem Datenspeicher, beim Auslesen aus dem Datenspeicher und/oder der Übertragung zum und vom Datenspeicher können somit ferner durch ein geeignetes überlagertes Sicherheitsprotokoll sicher erkannt werden, und zwar nicht nur unter Anwendung einer bidirektionalen sicheren Kommunikationsbeziehung zwischen Sender und Empfänger, sondern auch, wenn defacto keine bidirektionale sichere Kommunikationsbeziehung mehr existiert .

Da der Datenspeicher/Server somit nicht sicherheitsgerichtet sein muss, sind folglich auch Standard Datenspeicher/Server einsetzbar und/oder bei Nutzung von Cloud-Technologien sind sowohl öffentliche als auch private Clouds nutzbar.

Die sichere Kommunikation zwischen sicherem Produzent und sicherem Konsument kommt somit erfindungsgemäß nicht durch das übliche Übertragen von Telegrammen zwischen Produzent und Konsument sondern durch ein Produzent-seitiges Beschreiben eines remote Datenspeichers und ein Konsumentseitiges Auslesen dieses remote Datenspeichers zu Stande.

Bei Fig. 1, betreffend eine sichere Kommunikation nach der Erfindung über einen Datenspeicher, wird z.B. in dem sicheren Sender 1 als sicherer Produzent eine sichere Nachricht "SPDU" (im Englischen "Session Protokoll Data Unit") generiert und diese über eine aufgebaute Schreib-Zugriffs-Verbindung "write_data" auf den Datenspeicher 3 geschrieben. Dies kann ein Speicher auf einem nicht sicheren Server, aber auch einer Cloud-Computing-Infrastruktur oder eines anderen Dateisystems sein. Der sichere Empfänger 2 als sicherer Konsument liest diesen Speicher aus und erhält so indirekt die sichere Nachricht "SPDU". Obwohl die sichere Nachricht indirekt über einen entfernt liegenden Datenspeicher gelaufen ist, entsteht logisch eine "Kommunikationsverbindung 4" zwischen dem sicheren Sender 1 und dem sicheren Empfänger 2. Der sicherere Sender 1 und der sichere Empfänger 2 können hierbei, wie skizziert an der gleichen, aus Übersichtsgründen nicht näher dargestellten Netzwerkinfrastruktur NI1 oder auch an unterschiedlichen Netzwerkinfrastrukturen angebunden sein.

In Abwandlung zu diesem Ausführungsbeispiel kann sich z.B. eine modulare Maschine aus Maschinenmodulen verschiedener Hersteller zusammensetzen. Innerhalb der einzelnen Maschinenmodule wird die Sicherheitsfunktion lokal durch die üblichen Sicherheitssysteme, z.B. durch eine Sicherheitssteuerung und/oder zentral oder dezentral, umgesetzt. Im Rahmen der Erfindung können dann diese unterschiedlichen, mit einander als Produzenten und Konsumenten zusammen wirkenden Maschinenmodule je nach spezifischer Ausbildung als Netzwerkteilnehmer an einer gemeinsamen Netzwerkinfrastruktur oder an verschiedenen Netzwerkinfrastrukturen angebunden sein.

Die erfindungsgemäß Maschinen übergreifende sichere Kommunikation wird dann z.B. dadurch realisiert, dass ein Maschinenmodul als sicherer Produzent von sicheren Daten der sichere Sender 1 ist, der diese z.B. dann in Form von Objekten über OPC UA in einem Datenspeicher 3 auf einen Standard Server UA Server ablegt und der Empfänger 2 somit ein sicherer Konsument dieser sicheren Daten ist, der diese durch Auslesen der OPC UA Objekte empfängt und anschließend konsumieren kann. Die "OPC Unified Architecture", kurz OPC UA, als industrielles Machinen-zu-Machinen, kurz M2M, Kommunikationsprotokoll zeichnet sich z.B. durch die Fähigkeit aus, Maschinendaten (Prozesswerte, Messwerte, Parameter usw.) nicht nur zu transportieren, sondern auch maschinenlesbar semantisch zu beschreiben. Die in dem Datenspeicher auf dem Server abgelegten sicheren Daten enthalten wiederum zweckmäßig redundante Informationen, wie eindeutige Identifikatoren und z.B. CRC, laufende Nummern, Zeitstempel, etc., damit zumindest der die Objekte auslesende Empfänger 2 sicher alle Fehler bei dieser indirekten Übertragung über einen Datenserver erkennen kann.

Im Falle eines Ausführungsbeispiels nach Fig. 2 betreffend eine sichere Kommunikation zwischen zwei Safety-Geräten von zwei separaten Netzwerkinfrastrukturen NI1 bzw. NI2 über eine weitere Netzwerkinfrastruktur, insbesondere dem Internet, und insbesondere eine Cloud-Computing-Infrastruktur (bzw. abgekürzt als Cloud bezeichnet), generiert ein sicheres Eingangsmoduls eines E/A-Gerätes 12 (z.B. ein modulares entferntes E/A-Gerätes, welches auch als "remote" IO Station bezeichnet werden kann) als sicherer Sender 13 sichere Daten. Der sichere Sender 13 ist somit im Rahmen der Erfindung ein sicherer Produzent. Das sichere Eingangsmodul ist über diese IO Station 12 an eine erste Netzwerkinfrastruktur NI1 angebunden und ist ferner eingerichtet, diese sicheren Daten an den sicheren Empfänger 23 einer zu senden, welcher z.B. ein sicheres Ausgangsmodul eines E/A-Gerätes 22 (z.B. ein modulares entferntes E/A-Gerätes, welches auch als "remote" IO Station bezeichnet werden kann), das an einer zweiten Netzwerkinfrastruktur NI2 angebunden ist. Der sichere Empfänger 23 ist somit im Rahmen der Erfindung ein sicherer Konsument. Hierbei werden die sicheren Daten insbesondere in einem Sicherheitstelegramm, z.B. über einen Bus 11 der ersten Netzwerkinfrastruktur NI1, zu einer an diese als weiterer erster Netzwerkteilnehmer 10 angebundene Standard-Steuerung übertragen. Die Koppeleinheit 10a ist in diesem Fall somit eine Einheit der Standard-Steuerung, wobei im Rahmen der Erfindung auch umfasst ist, dass dieser weitere erste Netzwerkteilnehmer 10 z.B. mittels entsprechender Software mit der Koppeleinheit 10a eingerichtet und ausgebildet sein kann. Diese baut mittels einer ersten Schnittstelle 10a' über eine Internetverbindung mit der Cloud 5 eine Schreib-Zugriffsverbindung zu einem Server 3 auf, um die sicheren Daten in dem Sicherheitstelegram auf dem Datenspeicher 3 eines Servers abzulegen. Unabhängig hiervon baut eine mit einer Koppeleinheit 20a als weiterer zweiter Netzwerkteilnehmer 20 eingerichtete Standard-Steuerung (oder die Koppeleinheit als Einheit einer entsprechend eingerichteten Standard-Steuerung) der zweiten Netzwerkinfrastruktur NI2 mittels der Schnittstelle 20a' über eine Internetverbindung mit der Cloud 5 bevorzugt zyklisch eine Lese-Zugriffsverbindung zu dem Datenspeicher 3 auf, um nach neuen Daten anzufragen. Sind neue, für den sicheren Empfänger 23 bestimmte sichere Daten des sicheren Senders 13 im Datenspeicher 3 eingeschrieben, liest die Koppeleinheit 20a diese aus und überträgt sie, z.B. über einen Bus 21 der zweiten Netzwerkinfrastruktur NI2, zum E/A-Gerät 22, welches das sichere Telegramm letztendlich zu dem als sicherer Produzenten eingerichteten sicheren Empfänger 23 übergibt. Da bei diesem Ausführungsbeispiel zumindest eine der mit dem Produzenten oder dem Konsumenten im Rahmen der Erfindung in Verbindung stehende Koppeleinheit, gemäß Fig. 2 sogar beide Koppeleinheiten 10a und 20a, Teil eines Standard-Netzwerkteilnehmers ist, ist es für einen Fachmann ersichtlich, dass folglich die zur eindeutigen Identifikation des Kommunikationsweges bei der Datenübertragung von sicheren Daten zwischen dem sicheren Produzenten und dem sicheren Konsumenten von Daten eingesetzten Informationen zumindest teilweise auch für die Verwendung wenigstens eines zur Übertragung von Daten zwischen dem jeweiligen Standard-Netzwerkteilnehmer und dem Datenspeicher, d.h. zum Einschreiben bzw. Auslesen, eingesetzten Übertragungsprotokolls, entsprechend geeignet angepasst sein müssen. Eine konkrete Anwendung kann z.B. auf Basis eines CODESYS (Entwicklungsumgebung "Controller Development System" für Speicherprogrammierbare Steuerungen "SPS") Projekts realisiert sein, bei welchem eine als Koppeleinheit 10 eingerichtete SPS (englisch auch: Programmable Logic Controller, "PLC") über den Bus 11 der ersten, in diesem Fall eigenen Netzwerkinfrastruktur (z.B. Ethercat- basierend) sichere Daten in einem Sicherheitstelegramm von einem sicheren Eingangsmodul 13 empfängt, und diese in einer "PLC Cloud" ablegt.

In weiterer Abwandlung zu diesem Ausführungsbeispiel kann z.B. die Koppeleinheit 20a auch Teil einer Standard-Steuerung mit Internet-Zugang sein, an die eine (bzw. zweite) Netzwerkinfrastruktur eines lokales geschlossenes Netzwerk mit sicherer Teilnehmern (zum Beispiel Safety Bridge) angeschlossen ist. Einer dieser Teilnehmer stellt z.B. eine Sicherheitssteuerung (z.B. ein Sicherheitsgerichtetes digitales Ausgangsmodul des Typs "LPSDO" der Anmelderin) dar, welche auch Daten aus einem anderen lokalen Netzwerk mit anderer (bzw. erste) Netzwerkinfrastruktur von einem dort angeschlossenen sicheren Eingangsteilnehmer (z.B. ein Sicherheitsgerichtetes digitales Eingangsmodul des Typs "PSDI" der Anmelderin PSDI) konsumieren möchte. Die Standard-Steuerung des anderen lokalen Netzwerkes hat ebenfalls einen Zugang zum Internet. Die Sicherheitssteuerung des einen (bzw. zweiten) lokalen geschlossenen Netzwerks ist in diesem Fall somit der sichere Produzent und die Sicherheitssteuerung des anderen (bzw. ersten) lokalen Netzwerks der sichere Konsument.

Beide Standard-Steuerungen haben Zugriff zum selben Datenspeicher einer Cloud bzw. einer Cloud-Computing-Infrastruktur. In diesen Fall ist demnach die Standard-Steuerung des anderen (bzw. ersten) lokalen Netzwerkes eingerichtet und ausgebildet, über eine entsprechende Schreib-Zugriffsverbindung die Daten des sicheren Eingangsteilnehmers PSDI in den Datenspeicher der Cloud einzuschreiben und die Standard-Steuerung des einen (bzw. zweiten) Netzwerkes ist eingerichtet und ausgebildet, über eine entsprechende Lese-Zugriffsverbindung diese Daten bei Bedarf auszulesen und sie zum LPSDO im anderen (bzw. ersten) lokalen Netzwerk zu übertragen.

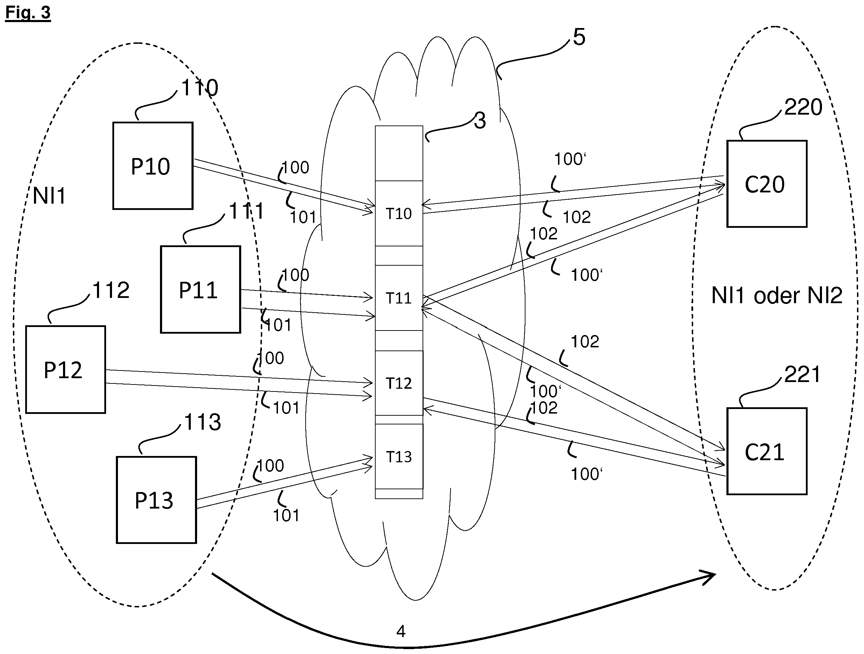

Ein weiteres Ausführungsbeispiel nach Fig. 3 betrifft eine sichere Übertragung von vier sicheren Produzenten P10, P11, P12, P13 zu zwei sicheren Konsumenten C20, C21, bei denen defacto keine bidirektionale sichere Kommunikationbeziehung existiert.

Die sicheren Produzenten P10, P11, P12 und P13 erzeugen in diesem Fall sicherheitsrelevante Daten in Unkenntnis und unabhängig davon, ob diese jemals konsumiert werden. Die sicheren Produzenten P10, P11, P12 und P13 sind z.B. jeweils Teil eines Eingangsdaten bereitstellenden Netzwerkteilnehmers 110, 111, 112 bzw. 113 einer ersten Netzwerkinfrastruktur NI1 oder als solches ausgebildet und eingerichtet. Die von den sicheren Produzenten P10, P11, P12 und P13 sicher erzeugten Daten, insbesondere sicherheitsrelevanten Daten, werden anschließend an einen Standard-Datenspeicher 3, z.B. in einer Cloud 5 gesandt und auf diesem auf unterschiedlichen vorbestimmten, d.h. für den Produzenten P10, P11, P12 oder P13 des Netzwerkteilnehmers 110, 111, 112 bzw. 113 jeweils durch entsprechende Identifikationsinformationen vorgegebenen Speicherbereichen T10, T11, T12 oder T13 abgelegt. Hierbei entsprechend ferner umfasste Koppeleinheiten sind aus Gründen der Übersichtlichkeit nicht dargestellt.

Zwei Konsumenten C20 und C21, welche z.B. jeweils Teil eines Eingangsdaten zu Ausgangsdaten weiterverarbeitenden Netzwerkteilnehmers 220 bzw. 221 oder als solches ausgebildet und eingerichtet sind, lesen die für sie relevanten, und insbesondere nur diese Daten aus dem nichtsicheren Speicher 3 aus und prüfen über die Inhalte und Zusatzinformationen die Integrität der Daten und der Übertragung. Für das Auslesen dieser Daten aus dem Standard-Datenspeicher 3 wird hierfür z.B. ausschließlich auf vorbestimmte, d.h. auf für die Konsumenten C20 und C21 der Netzwerkteilnehmer 220 bzw. 221 jeweils vorgegebene Speicherbereiche T10, T11, T12 oder T13 lesend zugegriffen. Benötigt der Konsument C20 (des Netzwerkteilnehmers 220) z.B. die Daten von den Produzenten P10 und P11 (des Netzwerkteilnehmers 110 bzw. 111), wohingegen Konsument C21 (des Netzwerkteilnehmers 221) die Daten von 110 und 120 von den Produzenten P11 und P12 (des Netzwerkteilnehmers 111 bzw. 112) konsumieren soll, werden diesen für den Daten auslesenden Zugriff jeweils Speicherbereiche T10 und T11 bzw. T11 oder T12 durch entsprechende Identifikationsinformationen vorgegeben, so dass sichergestellt ist, dass lediglich Daten aus diesen vorbestimmten Speicherbereichen konsumiert werden. Auch hierbei sind entsprechend ferner umfasste Koppeleinheiten aus Gründen der Übersichtlichkeit wiederum nicht dargestellt.

Die Daten des Produzenten P13 (des Netzwerkteilnehmers 113) werden in diesem Ausführungsbeispiel somit von keinem Endgerät konsumiert.

In diesem Ausführungsbeispiel müssen ferner von den Produzenten auch keine sicherheitsgerichteten Auswertungen des Erfolgs/Misserfolgs des Versendens des Sicherheitstelegramms und damit verbundene fehlersichere Reaktionen vorgenommen werden. Eine Rückantwort an diese erübrigt sich. Sämtliche Maßnahmen für die Erkennung von Übertragungsfehlern, insbesondere auch jegliche fehlersichere Reaktion auf erkannte Übertragungsfehler, werden somit bevorzugt ausschließlich in dem Konsumenten C20 oder C21, des Netzwerkteilnehmers 220 bzw. 221 umgesetzt. Die sicheren Produzenten P10, P11, P12 und P13 unterstützen die fehlererkennenden Maßnahmen zweckmäßig lediglich durch die fehlersichere Erzeugung von für die Fehlererkennung notwendigen zusätzlichen Informationen wie, z.B. sichere (ggfl. weltweit eindeutige) Identifikation des Erzeugers, sichere Zeitstempel, sichere fortlaufende Nummern und/oder sichere CRCs.

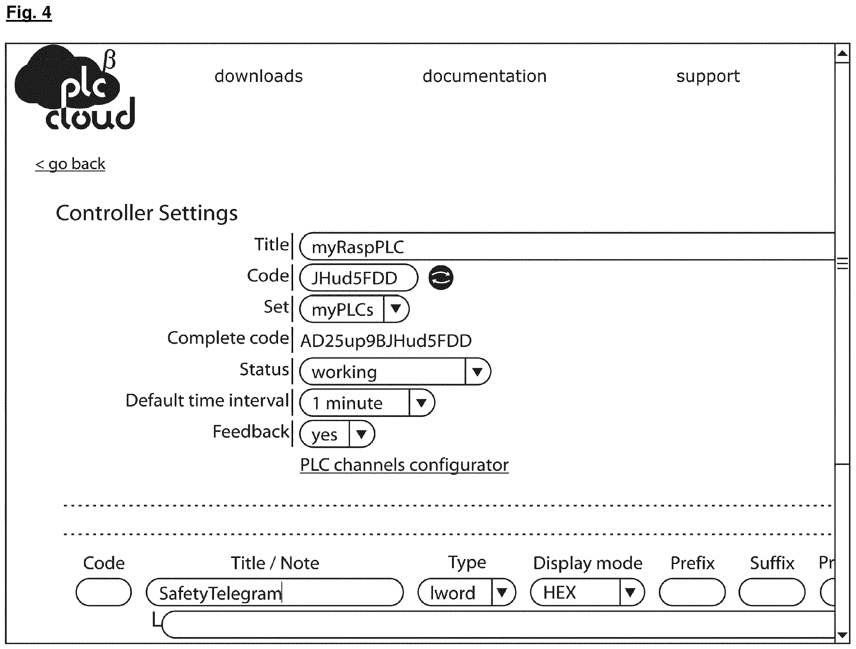

Fig. 4 zeigt einen beispielhaften "Screenshot" eines auf einem Monitor angezeigten Ausschnittes eines Konfigurationsmenüs zum Einstellen der Cloud Parameter für einen im Rahmen der Erfindung abzulegenden Datensatz, z.B. für einen im Speicherbereich T10 abzulegenden Datensatz. Hierbei ist der sichere Produzent P10 der sicheren Daten z.B. eine mit "myRaspPLC" bezeichnete speicherprogrammierbare sichere Steuerung. In der nächst tieferen, mit "PLC channels configurator"" bezeichneten Ebene des Konfigurationsmenüs können dann von einem Anwender z.B. die Zugangsdaten für den Standard-Datenspeicher 3 der Cloud 5 sowie der bestimmte Speicherbereich T10 zur Ablage eines jeweils erzeugten Datensatzes vorgegeben werden. Ein jeweils von der speicherprogrammierbaren sicheren Steuerung erzeugter sicherer Datensatz ist gemäß dargestellten Beispiel ein Satz sicherer Daten eines Sicherheitstelegramms "SafetyTelegramms", welches insbesondere auch alle zusätzlichen für die absichernden Maßnahmen zur Fehlererkennung und zweckmäßig auch -sichernden notwendigen Informationen enthält, welche von einem Konsumenten, z.B. gemäß Fig. 3 von dem Konsumenten C20, dieses Sicherheitstelegramms für eine Umsetzung dieser Maßnahmen benutzt wird.

Für den Fachmann ist es ersichtlich, dass das Konfigurationsmenü zum Einstellen der Cloud Parameter für einen abzuholenden Datensatz im Rahmen der Erfindung, z.B. für einen von dem Konsumenten C20 aus dem Speicherbereich T10 zu konsumierenden abgelegten Datensatz entsprechende Konfigurationsmöglichkeiten bereithalten kann.

Für den Fachmann ist aufgrund vorstehender Beispiele ferner erkennbar, dass weitere mögliche weitere Ausgestaltungen im Rahmen der Erfindung möglich sind, wie z.B. eine sichere Kommunikation zwischen zwei Sicherheitssteuerungen über eine Cloud, eine sichere Kommunikation zwischen einem "Cloud fähigen" Sensor und einer Sicherheitssteuerung oder eine sichere Kommunikation zwischen einer Sicherheitssteuerung und dem digitalen Abbild eines sicheren I/O Gerätes (Simulation).

Ferner können in Ergänzung zu vorstehenden Ausführungsbeispielen in den Zugriffeinheiten auch Sicherheitsinformation hinterlegt und die Zugriffeinheiten eingerichtet und ausgebildet sein, unter Verwendung der Sicherheitsinformation eine gesicherte Datenübertragung, und insbesondere eine verschlüsselte Datenübertragung zu initiieren, insbesondere mit einer Cloud-Computing-Infrastruktur zu initiieren. Hierdurch kann die Sicherheit der Datenübertragung deutlich gesteigert werden. Insbesondere kann diesbezüglich in einem Speicherbereich der Zugriffeinheiten ein sogenanntes Sicherheitszertifikat hinterlegt bzw. gespeichert sein. Dieses Sicherheitszertifikat kann zum Beispiel vom Anbieter einer Cloud-Computing-Infrastruktur ausgestellt worden sein. Mittels eines solchen Sicherheitszertifikats kann zum einen sich eine Koppeleinheit gegenüber der Cloud-Computing-Infrastruktur authentifizieren und also belegen, dass sie für eine Datenübertragung mit der Cloud-Computing-Infrastruktur zugelassen ist. Die zur Datenübertragung aufgebaute Verbindung ist dann folglich sicher (secure). Zum anderen kann auf Basis dieses Sicherheitszertifikats eine verschlüsselte Datenübertragung zwischen der Koppeleinheit und der Cloud-Computing-Infrastruktur erfolgen. Als Verschlüsselungsmechanismus kann dabei zum Beispiel TLS (engl.: transport layer security) vorgesehen sein.

### Bezugszeichenliste:

- 1, 13: sichere Sender;
- 1a, 10a: erste Koppeleinheit;
- 2, 23: sichere Empfänger;
- 2a, 20a: zweite Koppeleinheit;
- 1a', 10a', 2a', 20a': Schnittstelle;
- 3: Datenspeicher;
- 5: Cloud-Computing-Infrastruktur;
- 10, 20: erster, zweiter weiterer Netzwerkteilnehmer;
- 12, 22: E/A-Gerät;
- 11, 21: lokaler Bus;
- 100: schreibender Zugriff;
- 101: einschreiben;
- 100': lesender Zugriff;
- 102: auslesen bzw. abholen;
- 110, 111, 112, 113: Netzwerkteilnehmer;
- 220, 221: Netzwerkteilnehmer
- P10, P11, P12, P13: sichere Produzenten;
- C20, C21: sichere Konsumenten;
- T10, T11, T12, T13: Speicherbereiche;
- NI1, NI2: erste, zweite Netzwerkinfrastruktur.

## Patentansprüche

1. Netzwerksystem eines fehlersicheren Automatisierungssystems zur funktional sicheren Datenübertragung zwischen wenigstens einem funktional sicheren Produzenten von Daten und wenigstens einem funktional sicheren Konsumenten von Daten,
wobei der funktional sichere Produzent (1, 13, P10, P11, P12, P13) ein Netzwerkteilnehmer (NI1) ist, der an eine erste Netzwerkinfrastruktur angebunden ist und der funktional sichere Konsument (2, 23, C20, C21) ein Netzwerkteilnehmer ist, der an die erste Netzwerkinfrastruktur (NI1) oder an eine zweite Netzwerkinfrastruktur (NI2) angebunden sein kann,
und wobei wenigstens einer dieser funktional sicheren Produzenten eingerichtet ist, Daten für wenigstens einen dieser funktional sicheren Konsumenten sicher funktional zu erzeugen, und wenigstens einer dieser funktional sicheren Konsumenten eingerichtet ist, Daten von wenigstens einem dieser funktional sicheren Produzenten funktional sicher zu konsumieren, umfassend
- einen Datenspeicher (3) in welchen Daten einschreibbar und aus welchem Daten auslesbar sind,
- sowie wenigstens eine erste Koppeleinheit (1a, 10a) und wenigstens eine zweite Koppeleinheit (2a, 20a) mit jeweils wenigstens einer Schnittstelle (1a', 10a', 2a', 20a'),
- wobei wenigstens einer dieser funktional sicheren Produzenten, der eingerichtet ist, Daten für wenigstens einen dieser funktional sicheren Konsumenten zu erzeugen, mit einer solchen ersten Koppeleinheit (1a, 10a) in Verbindung steht und diese erste Koppeleinheit (1a, 10a) eingerichtet und ausgebildet ist, mittels deren Schnittstelle (1a', 10a') durch Aufbau zumindest einer Schreib-Zugriffsverbindung (100) zu dem Datenspeicher von diesem funktional sicheren Produzenten erzeugte Daten in dem Datenspeicher als solche identifizierbar einzuschreiben (101),
und
- wobei wenigstens einer dieser funktional sicheren Konsumenten, der eingerichtet ist, Daten von wenigstens einem dieser funktional sicheren Produzenten funktional sicher zu konsumieren, mit einer solchen zweiten Koppeleinheit (2a, 20a) in Verbindung steht und diese zweite Koppeleinheit eingerichtet und ausgebildet ist, mittels deren Schnittstelle durch Aufbau zumindest einer Lese-Zugriffsverbindung (100') zu dem Datenspeicher aus diesen Daten des funktional sicheren Produzenten, die in diesem Datenspeicher als für diesen funktional sicheren Konsumenten bestimmte Daten identifizierbar eingeschrieben sind, auszulesen (102),
wobei Sicherheitsmechanismen betreffend funktionale Sicherheit zur Umsetzung von fehlererkennenden Maßnahmen in Bezug auf Daten, die zwischen dem funktional sicheren Produzenten und dem funktional sicheren Konsumenten zu übertragen sind, ausschließlich im funktional sicheren Produzenten und funktional sicheren Konsumenten vorhanden sind und/oder
wobei zumindest die Umsetzung von fehlererkennenden Maßnahmen in Bezug auf Daten, die zwischen dem funktional sicheren Produzenten und dem funktional sicheren Konsumenten zu übertragen sind, ausschließlich im funktional sicheren Konsumenten erfolgt.

2. Netzwerksystem nach Anspruch 1,
wobei der funktional sicherere Produzent, der eingerichtet ist, Daten für wenigstens einen dieser funktional sicheren Konsumenten zu erzeugen, eingerichtet ist, Daten für wenigstens einen bestimmten funktional sicheren Konsumenten funktional sicher zu erzeugen
und/oder
die mit diesem funktional, sichereren Produzenten in Verbindung stehende erste Koppeleinheit (1a, 10a) eingerichtet ist, Daten für wenigstens einen bestimmten funktional sicheren Konsumenten in dem Datenspeicher einzuschreiben.

3. Netzwerksystem nach Anspruch 1,
wobei der funktional sichere Produzent, der eingerichtet ist, Daten für wenigstens einen dieser funktional sicheren Konsumenten funktional sicher zu erzeugen, Daten unabhängig von einem bestimmten funktional sicheren Konsumenten zu erzeugen
und/oder
die mit diesem in Verbindung stehende erste Koppeleinheit (1a, 10a) eingerichtet ist, Daten unabhängig von einem bestimmten funktional sicheren Konsumenten in dem Datenspeicher einzuschreiben.

4. Netzwerksystem nach Anspruch 1, 2 oder 3,
wobei der funktional sichere Konsument, der eingerichtet ist, Daten von wenigstens einem dieser funktional sicheren Produzenten funktional sicher zu konsumieren, eingerichtet ist, Daten von einem bestimmten funktional sicheren Produzenten zu konsumieren
und/oder
die mit dem funktional sicheren Konsumenten in Verbindung stehende zweite Koppeleinheit (2a, 20a) eingerichtet ist, Daten von dem bestimmten funktional sicheren Produzenten auszulesen.

5. Netzwerksystem nach einem der Ansprüche 1 bis 4,
wobei die erste Koppeleinheit eine Einheit des funktional sicheren Produzenten ist oder eines ersten weiteren Netzwerkteilnehmers (10) ist, der an die erste Netzwerkinfrastruktur angebunden ist
und,
wobei die zweite Koppeleinheit eine Einheit des funktional sicheren Konsumenten ist oder eines zweiten weiteren Netzwerkteilnehmers (20) ist, der auch an die Netzwerkinfrastruktur dieses funktional sicheren Konsumenten angebunden ist.

6. Netzwerksystem nach einem der Ansprüche 1 bis 5,
wobei der Datenspeicher (3) an die erste Netzwerkinfrastruktur, an die zweite Netzwerkinfrastruktur oder an eine dritte Netzwerkinfrastruktur angebunden ist.

7. Netzwerksystem nach einem der Ansprüche 1 bis 6,
wobei der Datenspeicher an eine dritte Netzwerkinfrastruktur, insbesondere dem Internet, angebunden ist und insbesondere Teil einer Cloud-Computing-Infrastruktur (5) ist.

8. Netzwerksystem nach einem der Ansprüche 1 bis 7,
wobei innerhalb einer Netzwerkinfrastruktur Netzwerkteilnehmer Daten gemäß einem vordefinierten Kommunikationsprotokoll übertragen.

9. Netzwerksystem nach einem der Ansprüche 1 bis 8,
wobei der funktional sichere Produzent, der eingerichtet ist, Daten für wenigstens einen dieser funktional sicheren Konsumenten zu erzeugen, und der funktional sichere Konsument, der eingerichtet ist, Daten von wenigstens einem dieser funktional sicheren Produzenten funktional sicher zu konsumieren, eingerichtet und ausgebildet sind, für die Übertragung von Daten, die zwischen diesem funktional sicheren Produzenten und diesem funktional sicheren Konsumenten zu übertragen sind, ein gemeinsames vordefiniertes Sicherheitsprotokoll betreffend funktionale Sicherheit anzuwenden, insbesondere ein Sicherheitsprotokoll, welches unabhängig von der Verwendung jeweiliger Kommunikationsprotokolle zwischen Netzwerkteilnehmern diesen überlagert ist oder überlagert werden kann.

10. Netzwerksystem nach einem der Ansprüche 1 bis 9,
wobei Sicherheitsmechanismen betreffend funktionale Sicherheit zur Umsetzung von fehlersichernden Maßnahmen in Bezug auf Daten, die zwischen dem funktional sicheren Produzenten, der eingerichtet ist, Daten für wenigstens einen dieser sicheren Konsumenten zu erzeugen, und dem funktional sicheren Konsumenten, der eingerichtet ist, Daten von wenigstens einem dieser funktional sicheren Produzenten funktional sicher zu konsumieren, zu übertragen sind, ausschließlich im funktional sicheren Produzenten und funktional sicheren Konsumenten vorhanden sind.

11. Netzwerksystem nach einem der Ansprüche 1 bis 10,
wobei die Umsetzung von fehlersichernden Maßnahmen in Bezug auf Daten, die zwischen dem funktional sicheren Produzenten der eingerichtet ist, Daten für wenigstens einen dieser funktional sicheren Konsumenten zu erzeugen, und dem sicheren Konsumenten, der eingerichtet ist, Daten von wenigstens einem dieser funktional sicheren Produzenten funktional sicher zu konsumieren, zu übertragen sind, ausschließlich im funktional sicheren Konsumenten erfolgt.

12. Netzwerksystem nach einem der Ansprüche 1 bis 11, wobei
in dem funktional sicheren Produzenten, der eingerichtet ist, Daten für wenigstens einen dieser funktional sicheren Konsumenten zu erzeugen, und/oder in der mit diesem in Verbindung stehenden ersten Koppeleinheit,
sowie
in dem funktional sicheren Konsumenten, der eingerichtet ist, Daten von wenigstens einem dieser funktional sicheren Produzenten funktional sicher zu konsumieren und/oder in der mit diesem in Verbindung stehenden zweiten Koppeleinheit
jeweils wenigstens eine vorbestimmte Identifikationsinformation hinterlegt ist und diese jeweils eingerichtet und ausgebildet ist, zumindest das Einschreiben und Auslesen unter Verwendung dieser jeweils wenigstens einen Identifikationsinformation durchzuführen.

13. Verfahren zum Betreiben einer funktional sicheren Datenübertragung zwischen wenigsten einem funktional sicheren Produzenten (1, 13, P10, P11, P12, P13) von Daten und wenigstens einem funktional sicheren Konsumenten (2, 23, C20, C21) von sicheren Daten in einem fehlersicheren Automatisierungssystem, wobei dieser funktional sichere Produzent ein Netzwerkteilnehmer ist, der an eine erste Netzwerkinfrastruktur (NI1) angebunden ist und der funktional sichere Konsument ein Netzwerkteilnehmer ist, der an die erste Netzwerkinfrastruktur oder an eine zweite Netzwerkinfrastruktur (NI2) angebunden sein kann, umfassend die Schritte:
- funktional sicheres Erzeugen von Daten für wenigstens einen dieser funktional sicheren Konsumenten durch den funktional sicheren Produzenten, schreibendes Zugreifen (100) auf einen Datenspeicher, und Einschreiben (101) dieser erzeugten Daten, und zwar als solche identifizierbar, in den Datenspeicher,
und
- funktional sicheres Konsumieren von Daten wenigstens eines funktional sicheren Produzenten durch wenigstens einen dieser funktional sicheren Konsumenten, wobei auf einen Datenspeicher zugegriffen wird, und zwar zumindest lesend zugegriffen (100') wird, in welchen für diesen wenigstens einen dieser funktional sicheren Konsumenten bestimmte Daten als solche identifizierbar eingeschrieben werden, und wobei die Daten, die darin als für diesen wenigstens einen funktional sicheren Konsumenten bestimmte Daten identifizierbar eingeschrieben sind, ausgelesen werden,
- wobei Sicherheitsmechanismen betreffend funktionale Sicherheit zur Umsetzung von fehlererkennenden Maßnahmen in Bezug auf Daten, die zwischen dem funktional sicheren Produzenten und dem funktional sicheren Konsumenten übertragen werden, ausschließlich im funktional sicheren Produzenten und funktional sicheren Konsumenten vorhanden sind und/oder
- wobei fehlererkennende Maßnahmen in Bezug auf Daten, die zwischen dem funktional sicheren Produzenten, der eingerichtet ist, Daten für wenigstens einen dieser funktional sicheren Konsumenten zu erzeugen, und dem sicheren Konsumenten, der eingerichtet ist, Daten von wenigstens einem dieser funktional sicheren Produzenten funktional sicher zu konsumieren, zu übertragen sind, ausschließlich im funktional sicheren Konsumenten umgesetzt werden.

## Claims

1. A network system of an error-safe automating system for the functional safe transmission of data between at least one functional safe producer of data and at least one functional safe consumer of data,
wherein the functional safe producer (1, 13, P10, P11, P12, P13) is a network subscriber (NI1) which is connected to a first network infrastructure and the functional safe consumer (2, 23, C20, C21) is a network subscriber which can be connected to the first network infrastructure (NI1) or to a second network infrastructure (NI2),
and wherein at least one of these functional safe producers is arranged for generating functional safe data for at least one of these functional safe consumers, and at least one of these functional safe consumers is arranged for functionally safe consuming data from at least one of these functional safe producers, comprising
- a data memory (3) to which data can be written and from which data can be read out,
- and at least one first coupling unit (1a, 10a) and at least one second coupling unit (2a, 20a) with at least one interface (1a', 10a', 2a', 20a') respectively,
- wherein at least one of these functional safe producers, which is arranged for generating data for at least one of these functional safe consumers, is connected to such a first coupling unit (1a, 10a) and this first coupling unit (1a, 10a) is arranged and designed to write, by its interface (1a', 10a') by establishing at least one write access connection (100) to the data memory, data generated by this functional safe producer into the data memory which data can be identified as such (101),
and
- wherein at least one of these functional safe consumers, which is arranged for consuming data from at least one of the functional safe producers, is connected to such a second coupling unit (2a, 20a,) and this second coupling unit is arranged and designed to read, by its interface by establishing at least one read access connection (100') to the data memory, data of the functional safe producer from the data memory, which data is written in an identifiable manner in this data memory as determined for this safe consumer (102) wherein safety mechanisms concerning functional safety for the converting of error-recognizing measures regarding data to be transmitted between the functional safe producer and the functional safe consumer, are exclusively present in the safe producer and the safe consumer and/or
wherein at least the conversion of error-recognizing measures regarding data to be transmitted between the functional safe producer and the functional safe consumer, takes place exclusively in the safe consumer.

2. The network system according to Claim 1,
wherein the functional safe producer, that is arranged to generate data for at least one of these functional safe consumers is arranged to functionally safe generate data for at least one certain functional safe consumer,
and/or
the first coupling unit (1a, 10a) connected to this functional safe producer is arranged to write data for at least one certain functional safe consumer into the data memory.

3. The network system according to Claim 1
wherein the functional safe producer, that is arranged to functionally safe generate data for at least one of these functional safe consumers, and to generate data independently from a certain functional safe consumer
and/or
the associated connected first coupling unit (1a, 10a) is arranged to write data independently of a certain functional safe consumer into the data memory.

4. The network system according to Claim 1, 2 or 3,
wherein the functional safe consumer, that is arranged to functionally safe consume data from at least one of these functional safe producers is arranged to consume data from a certain functional safe producer
and/or
the second coupling unit (2a, 20a) connected to the functional safe consumer is arranged to read data from the certain functional safe producer.

5. The network system according to one of Claims 1 to 4,
wherein the first coupling unit is a unit of the functional safe producer or of a first other network subscriber (10) that is connected to the first network infrastructure,
and
wherein the second coupling unit is a unit of the functional safe consumer or of a second, other network subscriber (20) that is also connected to the network infrastructure of this functional safe consumer.

6. The network system according to one of Claims 1 to 5,
wherein the data memory (3) is connected to the first network infrastructure, to the second network infrastructure or to a third network infrastructure.

7. The network system according to one of Claims 1 to 6,
wherein the data memory is connected to a third network infrastructure, in particular to the Internet, and in particular is part of a cloud computing infrastructure (5).

8. The network system according to one of Claims 1 to 7,
wherein network subscribers transmit data within a network infrastructure according to a predefined communication protocol.

9. The network system according to one of Claims 1 to 8,
wherein the functional safe producer, which is arranged for generating data for at least one of these functional safe consumers, and the functional safe consumer, which is arranged for functionally safe consuming data from at least one of these functional safe producers are arranged and designed to use a common predefined safety protocol for the transmission of data to be transmitted between this functional safe producer and this functional safe consumer, in particular a safety protocol which is superposed or can be superposed, independently of the using of particular communication protocols between network subscribers.

10. The network system according to one of Claims 1 to 9,
wherein safety mechanisms concerning functionally safety for the converting of error-recognizing measures regarding data to be transmitted between the functional safe producer, which is arranged for generating data for at least one of these functional safe consumers, and the functional safe consumer, which is arranged for functionally safe consuming data from at least one of these functional safe producers, are exclusively present in the functional safe producer and the functional safe consumer.

11. The network system according to one of Claims 1 to 10,
wherein the conversion of error-recognizing measures regarding data to be transmitted between the functional safe producer, which is arranged for generating data for at least one of these functional safe consumers, and the functional safe consumer, which is arranged for functionally safe consuming data from at least one of these functional safe producers, takes place exclusively in the functional safe consumer.

12. The network system according to one of Claims 1 to 11,
wherein at least one piece of predetermined identification information is recorded respectively in the functional safe producer, which is arranged to generate data for at least one of these functional safe consumers, and/or in the associated connected coupling unit,
as well as
in the functional safe consumer, which is arranged to functionally safe consume data from at least one of these functional safe producers and/or in the associated connected second coupling unit, which identification information is arranged and designed to perform at least the writing and reading using this at least one piece of identification information.

13. A method for operating a functionally safe data transmission between at least one functional safe producer (1, 13, P10, P11, P12, P13) of data and at least one functional safe consumer (2, 23, C20, C21) of safe data, wherein this functional safe producer is a network subscriber which is connected to a first network infrastructure (NI1) and the functional safe consumer is a network subscriber which can be connected to the first network infrastructure or to a second network infrastructure (NI2), comprising the steps:
- functionally safe generating of data for at least one of these functional safe consumers by the functional safe producer, write accessing (100) to a data memory, and writing (101) of this generated data, identifiable as such, into the data memory,
and
- functionally safe consuming data of at least one functional safe producer by at least one of these functional safe consumers, wherein a data memory is accessed, and is accessed at least by reading (100'), into which certain data can be written in identifiable as such for this at least one of these functional safe consumers, and wherein the data are read, which was written in as certain identifiable data for this at least one functional safe consumer,
wherein safety mechanisms concerning functional safety for the converting of error-recognizing measures regarding data to be transmitted between the functional safe producer and the functional safe consumer, are exclusively present in the safe producer and the safe consumer and/or
wherein the conversion of error-recognizing measures regarding data to be transmitted between the functional safe producer, which is arranged for generating functional safe data for at least one of these functional safe consumers, and the functional safe consumer, which is arranged for functionally safely consuming data from at least one of these functional safe producers, takes place exclusively in the safe consumer.

## Revendications

1. Système de réseau d'un système d'automatisation sans erreur pour la transmission fonctionnellement sûre de données entre au moins un producteur de données fonctionnellement sûr et au moins un consommateur de données fonctionnellement sûr, le producteur fonctionnellement sûr (1, 13, P10, P11, P12, P13) étant un membre du réseau (NI1) qui est relié à une première infrastructure de réseau et le consommateur fonctionnellement sûr (2, 23, C20, C21) étant un membre du réseau qui peut être relié à la première infrastructure de réseau (NI1) ou à une deuxième infrastructure de réseau (NI2), et au moins un de ces producteurs fonctionnellement sûrs est conçu pour générer des données de manière fonctionnellement sûre pour au moins un de ces consommateurs fonctionnellement sûrs, et au moins un de ces consommateurs fonctionnellement sûrs étant conçu pour consommer de manière fonctionnellement sûre des données provenant de ces producteurs fonctionnellement sûrs, comprenant
- une mémoire de données (3) dans laquelle des données peuvent être écrites et à partir de laquelle des données peuvent être lues,
- ainsi qu'au moins une première unité de couplage (1a, 10a) et au moins une deuxième unité de couplage (2a, 20a) avec chacune au moins une interface 1a', 10a', 2a', 20a'),
- au moins un de ces producteurs fonctionnellement sûrs, qui est conçu pour générer des données pour au moins un de ces consommateurs fonctionnellement sûrs, étant relié avec une telle première unité de couplage (1a, 10a) et cette première unité de couplage (1a, 10a) étant conçue et réalisée pour écrire (101), au moyen de son interface (1a', 10a'), par l'établissement d'au moins une liaison d'accès en écriture (100) avec la mémoire de données, les données générées par ce producteur fonctionnellement sûr dans la mémoire de données de manière identifiable en tant que telles, et
- au moins un de ces consommateurs fonctionnellement sûrs, qui est conçu pour consommer de manière fonctionnellement sûre des données provenant d'au moins un de ces producteurs fonctionnellement sûrs, étant relié avec une telle deuxième unité de couplage (2a, 20a) et cette deuxième unité de couplage étant conçue et réalisée pour lire (102), au moyen de son interface, par l'établissement d'au moins une liaison d'accès en lecture (100') avec la mémoire de données, à partir de ces données du producteur fonctionnellement sûr, qui sont écrites de manière identifiable en tant que données déterminées pour ce consommateur fonctionnellement sûr,
des mécanismes de sécurité concernant la sécurité fonctionnelle, pour la mise en œuvre de mesures de détection d'erreurs en ce qui concerne les données qui doivent être transmises entre le producteur fonctionnellement sûr et le consommateur fonctionnellement sûr, étant présents exclusivement dans le producteur fonctionnellement sûr et le consommateur fonctionnellement sûr et/ou
au moins la mise en œuvre de mesures de détection d'erreurs en ce qui concerne les données qui doivent être transmises entre le producteur fonctionnellement sûr et le consommateur fonctionnellement sûr, ayant lieu exclusivement dans le consommateur fonctionnellement sûr.

2. Système de réseau selon la revendication 1
le producteur fonctionnellement sûr, qui est conçu pour générer des données pour au moins un de ces consommateurs fonctionnellement sûrs, étant conçu pour générer des données pour au moins un consommateur fonctionnellement sûr déterminé et/ou
la première unité de couplage (1a, 10a), reliée avec ce producteur fonctionnellement sûr, étant conçue pour écrire des données pour au moins un consommateur fonctionnellement sûr déterminé dans la mémoire de données.

3. Système de réseau selon la revendication 1,
le producteur fonctionnellement sûr, qui est conçu pour générer, de manière fonctionnellement sûre, des données pour au moins un de ces consommateurs fonctionnellement sûrs, étant conçu pour générer des données indépendamment d'un consommateur fonctionnellement sûr déterminé et/ou
la première unité de couplage (1a, 10a) relié avec celui-ci étant conçue pour écrire des données indépendamment d'un consommateur fonctionnellement sûr déterminé dans la mémoire de données.

4. Système de réseau selon la revendication 1, 2 ou 3,
le consommateur fonctionnellement sûr, qui est conçu pour consommer, de manière fonctionnellement sûre, des données provenant d'un de ces producteurs fonctionnellement sûrs, étant conçu pour consommer des données provenant d'un producteur fonctionnellement sûr déterminé et/ou
la deuxième unité de couplage (2a, 20a) reliée avec le consommateur fonctionnellement sûr étant conçue pour lire des données provenant du producteur fonctionnellement sûr déterminé.

5. Système de réseau selon l'une des revendications 1 à 4,
la première unité de couplage étant une unité du producteur fonctionnellement sûr ou d'un premier membre supplémentaire du réseau (10), qui est relié à la première infrastructure de réseau et
la deuxième unité de couplage étant une unité du consommateur fonctionnellement sûr ou d'un deuxième membre supplémentaire du réseau (20) qui est également relié à l' infrastructure de réseau de ce consommateur fonctionnellement sûr.

6. Système de réseau selon l'une des revendications 1 à 5,
la mémoire de données (3) étant reliée à la première infrastructure de réseau, à la deuxième infrastructure de réseau ou à une troisième infrastructure de réseau.

7. Système de réseau selon l'une des revendications 1 à 6,
la mémoire de données étant reliée à une troisième infrastructure de réseau, plus particulièrement Internet, et fait plus particulièrement partie d'une infrastructure infonuagique (5).

8. Système de réseau selon l'une des revendications 1 à 7,
les membres du réseau transmettant, au sein d'une infrastructure de réseau, des données selon un protocole de communication prédéfini.

9. Système de réseau selon l'une des revendications 1 à 8,
le producteur fonctionnellement sûr, qui est conçu pour générer des données pour au moins un de ces consommateurs fonctionnellement sûrs, et le consommateur fonctionnellement sûr, qui est conçu pour consommer, de manière fonctionnellement sûre, des données provenant d'au moins un de ces producteurs fonctionnellement sûrs, sont conçus pour appliquer, pour la transmission de données, qui doivent être transmises entre ce producteur fonctionnellement sûr et ce consommateur fonctionnellement sûr, un protocole de sécurité commun prédéfini concernant la sécurité fonctionnelle, plus particulièrement un protocole de sécurité qui est superposé ou peut être superposé, indépendamment de l'utilisation de protocoles de communication respectifs entre les membres du réseau, avec ceux-ci.

10. Système de réseau selon l'une des revendications 1 à 9,
des mécanismes de sécurité concernant la sécurité fonctionnelle, pour la mise en œuvre de mesures anti-erreurs concernant les données qui doivent être transmises entre le producteur fonctionnellement sûr, qui est conçu pour générer des données pour au moins un de ces consommateurs fonctionnellement sûrs, et le consommateur fonctionnellement sûr, qui est conçu pour consommer, de manière fonctionnellement sûre, des données provenant d'au moins un de ces producteurs fonctionnellement sûrs, étant présents exclusivement dans le producteur fonctionnellement sûr et dans le consommateur fonctionnellement sûr.

11. Système de réseau selon l'une des revendications 1 à 10,
la mise en œuvre de mesures anti-erreurs concernant les données qui doivent être transmises entre le producteur fonctionnellement sûr, qui est conçu pour générer des données pour au moins un de ces consommateurs fonctionnellement sûrs, et le consommateur fonctionnellement sûr, qui est conçu pour consommer, de manière fonctionnellement sûre, des données provenant d'au moins un de ces producteurs fonctionnellement sûrs, ayant lieu exclusivement dans le consommateur fonctionnellement sûr.

12. Système de réseau selon l'une des revendications 1 à 11, dans lequel, dans le producteur fonctionnellement sûr, qui est conçu pour générer des données pour au moins un de ces consommateurs fonctionnellement sûrs, et/ou dans la première unité de couplage reliée avec celui-ci,
ainsi que
dans le consommateur fonctionnellement sûr, qui est conçu pour consommer, de manière fonctionnellement sûre, des données provenant d'au moins un de ces producteurs fonctionnellement sûrs et/ou dans la deuxième unité de couplage reliée avec celui-ci,
est respectivement enregistrée au moins une information d'identification prédéterminée, et cette unité respective est conçue pour effectuer au moins l'écriture et la lecture de cette au moins une information d'identification.

13. Procédé d'exploitation d'une transmission de données fonctionnellement sûre entre au moins un producteur fonctionnellement sûr (1, 13, P10, P11, P12, P13) de données et au moins un consommateur fonctionnellement sûr (2, 23, C20, C21) de données sûres dans un système d'automatisation sans erreurs, ce producteur fonctionnellement sûr étant un membre du réseau qui est relié à une première infrastructure de réseau (NI1) et le consommateur fonctionnellement sûr étant un membre du réseau qui peut être relié à la première infrastructure de réseau (NI1) ou à une deuxième infrastructure de réseau (NI2), comprenant les étapes suivantes :
- génération fonctionnellement sûre de données pour au moins un de ces consommateurs fonctionnellement sûrs par le producteur fonctionnellement sûr, accès en écriture (100) à une mémoire de données, et écriture (101) de ces données générées, de manière identifiable en tant que telles, dans la mémoire de données et
- consommation fonctionnellement sûre de données d'au moins un producteur fonctionnellement sûr par au moins un de ces consommateurs fonctionnellement sûrs, où, on accède à une mémoire de données, avec au moins un accès en lecture (100'), dans laquelle sont écrites, de manière identifiable en tant que telles, des données déterminées pour au moins un de ces consommateurs fonctionnellement sûrs et les données, qui sont écrites dans celle-ci de manière identifiable en tant que données déterminées pour cet au moins un consommateur fonctionnellement sûr, sont lues,
- des mécanismes de sécurité concernant la sécurité fonctionnelle, pour la mise en œuvre de mesures de détection d'erreurs concernant les données qui sont transmises entre le producteur fonctionnellement sûr et le consommateur fonctionnellement sûr, étant présents exclusivement dans le producteur fonctionnellement sûr et dans le consommateur fonctionnellement sûr et/ou
- des mesures de détection d'erreurs concernant les données qui doivent être transmises entre le producteur fonctionnellement sûr, qui est conçu pour générer des données pour au moins un de ces consommateurs fonctionnellement sûrs, et le consommateur fonctionnellement sûr, qui est conçu pour consommer, de manière fonctionnellement sûre, des données provenant d'au moins un de ces producteurs fonctionnellement sûrs, étant mises en œuvre exclusivement dans le consommateur fonctionnellement sûr.
